(19) Europäisches Patentamt / European Patent Office / Office européen des brevets

(11) **EP 4 404 348 A1**

(12) **EUROPEAN PATENT APPLICATION**
published in accordance with Art. 153(4) EPC

(43) Date of publication:
**24.07.2024   Bulletin 2024/30**

(21) Application number: **22958956.9**

(22) Date of filing: **30.11.2022**

(51) International Patent Classification (IPC):
**H01M 50/244** (2021.01)        **H01M 50/375** (2021.01)
**H01M 10/613** (2014.01)

(86) International application number:
**PCT/CN2022/135300**

(87) International publication number:
**WO 2024/113208 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde City, Fujian PRC 352100 (CN)**

(72) Inventors:
• **KE, Jianhuang
  Ningde City, Fujian 352100 (CN)**
• **CHEN, Xiaobo
  Ningde City, Fujian 352100 (CN)**
• **LI, Yao
  Ningde City, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **BATTERY AND ELECTRICAL DEVICE**

(57)    Embodiments of the present application provide a battery and an electrical device. The battery includes: a box body including an electrical cavity; a battery cell group accommodated in the electrical cavity, wherein the battery cell group includes a plurality of battery cells arranged in a first direction, at least two battery cells in the battery cell group are each provided with a pressure relief mechanism, and the pressure relief mechanism is arranged on a first wall of the battery cell; and a supporting member attached to the first wall to support the battery cell, wherein the supporting member includes escape cavities corresponding to at least two of the pressure relief mechanisms in the battery cell group, and the escape cavities are used for providing deformation spaces for actuation of the at least two pressure relief mechanisms. The battery and the electrical device in the embodiments of the present application are capable of improving the safety performance of the battery.

**FIG. 2**

EP 4 404 348 A1

**Description**

**TECHNICAL FIELD**

The present application relates to the field of battery technologies, and in particular, to a battery and an electrical device.

**BACKGROUND**

With the continuous advancement of battery technologies, various new energy industries using batteries as energy storage devices have developed quickly. In the development of the battery technologies, safety of batteries is also a non-negligible important issue in addition to improvement of the battery performance. If the safety of the batteries cannot be guaranteed, the batteries cannot be used. Therefore, how to enhance the safety performance of the batteries is an urgent technical problem to be solved in the battery technologies.

**SUMMARY OF THE INVENTION**

Embodiments of the present application provide a battery and an electrical device, which are capable of improving the safety of the battery.

In a first aspect, a battery is provided, including: a box body including an electrical cavity; a battery cell group accommodated in the electrical cavity, wherein the battery cell group includes a plurality of battery cells arranged in a first direction, at least two battery cells in the battery cell group are each provided with a pressure relief mechanism, and the pressure relief mechanism is arranged on a first wall of the battery cell; and a supporting member attached to the first wall to support the battery cell, wherein the supporting member includes escape cavities corresponding to at least two of the pressure relief mechanisms in the battery cell group, and the escape cavities are used for providing deformation spaces for actuation of the at least two pressure relief mechanisms.

Therefore, in the embodiments of the present application, by arranging the supporting member in the battery, the supporting member being attached to the first wall of the battery cell, a supporting function may be provided for the battery cell, so that the first wall has a better compressive strength. When an external pressure is applied to the battery, the arranged supporting member can resist most or even all of the external pressure, thereby reducing or eliminating the impact of the external pressure on the battery cell, and improving the pressure resistance and safety performance of the battery. In addition, the pressure relief mechanism is further arranged on the first wall of the battery cell, and the supporting member is provided with escape cavities corresponding to at least two pressure relief mechanisms in the battery cell group. In this way, when the pressure relief mechanism is actuated, the escape cavity of the supporting member can be used for providing a deformation space for the pressure relief mechanism, so as to prevent the supporting member from blocking the pressure relief mechanism, so that an emission of the battery cell is capable of being smoothly discharged from the pressure relief mechanism.

In some embodiments, escape openings are arranged on a surface of the supporting member close to the battery cell group, at least two of the pressure relief mechanisms face the escape openings, and the escape cavities are in communication with the escape openings. Therefore, by arranging the escape opening on the surface of the supporting member close to the battery cell group, when the pressure relief mechanism is actuated, the emission discharged from the pressure relief mechanism can quickly enter the escape cavity through the escape opening, for avoiding the emission from being accumulated in the electrical cavity, and avoiding short circuit caused by the emission conducting on electrical connecting components in the electrical cavity, thereby improving the safety of the battery.

In some embodiments, when the pressure relief mechanism is actuated, the emission from the battery cell enters the escape cavity through the escape opening and is then discharged from the escape cavity. When thermal runaway of the battery cell occurs, due to a limited internal space of the escape cavity, the emission discharged through the pressure relief mechanism is easy to accumulate in the escape cavity and have a thermal impact on the pressure relief mechanism, which in turn causes thermal spread between the battery cells. In the embodiments of the present application, the emission quickly enters the escape cavity through the escape opening, and the emission is discharged to the outside of the escape cavity, which is beneficial to avoid thermal spread caused by the accumulation of the emission in the escape cavity, thereby improving the safety of the battery.

In some embodiments, the escape cavities and/or escape openings are successively arranged in the first direction. In this way, in the embodiments of the present application, the escape cavities may be successively arranged in the first direction, and the escape cavities may correspond to a plurality of pressure relief mechanisms, and/or the escape openings may be successively arranged in the first direction, and the escape openings may correspond to a plurality of pressure relief mechanisms. Therefore, for the plurality of pressure relief mechanisms arranged in the first direction, it can be avoided that one or a plurality of pressure relief mechanisms do not correspond to the escape cavity or do not correspond to the escape opening, that is, the situation that the pressure relief mechanism between two adjacent escape cavities does not correspond to an escape cavity is avoided, and the situation that the pressure relief mechanism between two adjacent escape openings does not correspond to an escape opening is further avoided, so that the emission discharged from each pressure relief mechanism among the plurality of pressure relief mechanisms arranged in the first direction can enter the escape cavity through the escape opening, and meanwhile, the structure is simple and convenient for processing and assembling of the battery.

In some embodiments, the escape cavity is provided with a weak region, and the weak region is used for allowing the emission to pass through the weak region to be discharged from the escape cavity when the pressure relief mechanism is actuated. In this way, when the thermal runaway of the battery cell occurs, after the emission discharged from the pressure relief mechanism enters the escape cavity, it may be discharged through the weak region on the escape cavity, which can effectively avoid the thermal spread caused by the accumulation of the emission in the escape cavity, and can also achieve directional discharge. For example, the position of the weak region can be reasonably set to discharge the emission from a specific region, for avoiding the impact of the emission on other components, thereby improving the safety of the battery.

In some embodiments, the weak region is used for being destroyed upon actuation of the pressure relief mechanism to allow the emission to be discharged from the escape cavity. In this way, when the pressure relief mechanism is not actuated, for example, during normal use of the battery, the escape cavity is in a relatively sealed state, which can effectively protect the escape cavity from being destroyed by an external force. When the pressure relief mechanism is actuated, the strength of the weak region on the escape cavity is less than that of the region on the escape cavity other than the weak region, and therefore, the weak region is easily destroyed to allow the emission from the battery cell to pass through the weak region and then be discharged to the outside of the escape cavity.

In some embodiments, the escape cavity includes a bottom wall and a side wall, the bottom wall is arranged opposite to the first wall, the side wall is connected to the bottom wall and extends toward the first wall, and the weak region is arranged on the bottom wall and/or the side wall.

In the embodiment of the present application, when the weak region is arranged on the bottom wall of the escape cavity, in a case that thermal runaway of the battery cell occurs, the emission discharged through the pressure relief mechanism can be directly discharged to the outside of the escape cavity through the bottom wall of the escape cavity, thereby improving the safety of the battery. In addition, in a case that thermal runaway of the battery cell occurs, when the high-temperature and high-pressure emission discharged through the pressure relief mechanism enters the escape cavity, it will be discharged toward the side wall of the escape cavity, and due to the blocking effect of the side wall of the escape cavity, the emission will accumulate in a region close to the side wall. Therefore, by arranging the weak region on the side wall of the escape cavity, it is conducive to discharging the emission in time, which effectively avoids the accumulation of the emission at the side wall of the escape cavity.

In some embodiments, the weak region is arranged at an end portion of the bottom wall and/or the side wall in the first direction.

In the embodiment of the present application, when the thermal runaway of the battery cell occurs, due to the blocking of the emission by the side wall of the escape cavity, the emission usually accumulates more seriously at the intersection of the bottom wall and the side wall of the escape cavity. At the same time, in some cases, due to the poor sealing of the intersection of the bottom wall and the side wall of the escape cavity, an air flow channel may be formed at a position where the sealing fails at the intersection, and under the action of a pressure difference of internal and external pressures, the airflow generated during the thermal runaway of the battery may carry the emission to move towards the intersection of the bottom wall and the side wall of the escape cavity, which may intensify the accumulation of the emission at the intersection of the bottom wall and the side wall of the escape cavity. In addition, in a case that the plurality of pressure relief mechanisms corresponding to the escape cavities are arranged in the first direction, the size of the side wall at the end portion of the escape cavity is smaller than that of other walls, and therefore, the accumulation of the emission discharged through the pressure relief mechanism at the end portion of the bottom wall and/or side wall of the escape cavity in the first direction is the most serious, and it is easy to cause the thermal spread of the battery cell. Therefore, by arranging the weak region at the end portion of the bottom wall and/or the side wall in the first direction, the thermal spread caused by the accumulation of the emission in the escape cavity is effectively prevented, thereby improving the safety of the battery.

In some embodiments, the weak region meets:

$$1 \times 10^{-4} \left(mm \cdot L\right)/Wh \leq \frac{d}{E} \leq 3 \times 10^{-3} \left(mm \cdot L\right)/Wh$$

wherein $d$ is the minimum thickness of the weak region, and E is the volumetric energy density of the battery cell.

Therefore, in the embodiment of the present application, by setting a value of d/E reasonably, the emission generated by the battery cell is capable of being discharged timely and smoothly, so as to improve the safety of the battery. Specifically, if the value of d/E is set too large, there may be a situation that the minimum thickness d of the weak region of the escape cavity is set relatively large, while the volumetric energy density E of the battery cell is set relatively small. In this way, when the thermal runaway of the battery cell occurs, the temperature or pressure of the discharged emission is relatively low. When the minimum thickness d of the weak region of the escape cavity is set too large, it may be difficult for the emission to destroy the escape cavity to discharge the emission in time, or it may take too long to destroy the escape cavity, which eventually leads to the emission being confined in the escape cavity under the pressure relief mechanism, and the space of the escape cavity is limited, which easily causes a thermal spread phenomenon between battery cells. Therefore, the value of d/E should not be set too large.

Conversely, the value of d/E should not be set too small. Due to the structural limitation of the battery cell itself, the volumetric energy density E of the battery cell has an upper limit value. Therefore, if the value of d/E is set too small, that is, in a case that the volumetric energy density E of the battery is constant, the minimum thickness d of the weak region of the escape cavity will be small, so that the escape cavity is insufficient in structural strength, and is easy to be broken during normal use of the battery, thereby reducing the sealing performance of the escape cavity and thus reducing the safety of the battery.

In some embodiments, the weak region meets:

$$0.1\left(°C \cdot L\right)/Wh \le \frac{T_1}{E} \le 1.2\left(°C \cdot L\right)/Wh$$

wherein $T_1$ is the melting point of the material of the weak region, and $E$ is the volumetric energy density of the battery cell.

Therefore, in the embodiment of the present application, by setting a value of $T_1/E$ reasonably, the emission generated by the battery cell is capable of being discharged timely and smoothly, so as to improve the safety of the battery. Therefore, the value of $T_1/E$ in the embodiment of the present application should not be set too small. Due to the structural limitation of the battery cell itself, the volumetric energy density $E$ of the battery cell has an upper limit value. Therefore, if the value of $T_1/E$ is too small, that is, when the volumetric energy density $E$ of the battery cell is constant, the value of the melting point $T_1$ of the material in the weak region of the escape cavity will be small, which may increase the difficulty in material selection on the one hand, and may also make the structural strength of the escape cavity insufficient on the other hand. The battery temperature may rise under normal use, such as during charging and discharging, of the battery, the weak region of the escape cavity is likely to be softened or melted during normal use of the battery, which reduces the sealing performance of the escape cavity and reduces the safety of the battery.

The value of $T_1/E$ in the embodiment of the present application should not be set too large. If the value of $T_1/E$ is too large, that is, the melting point $T_1$ of the material in the weak region of the escape cavity is set relatively high, and the volumetric energy density $E$ of the battery cell is set relatively small, correspondingly, when the thermal runaway of the battery cell occurs, the temperature of the emission discharged from the pressure relief mechanism is relatively low. When the melting point $T_1$ of the material in the weak region of the escape cavity is set too high, it may be difficult for the emission to melt the weak region of the escape cavity and discharge the emission in time, or it may take too long to melt the weak region of the escape cavity, which in turn causes the emission to be confined in the escape cavity corresponding to the pressure relief mechanism, and the space of the escape cavity is limited, thereby easily causing the thermal spread phenomenon between the battery cells.

In some embodiments, the thickness of the weak region is smaller than the thickness of the region on the escape cavity other than the weak region, so as to facilitate the processing and assembling of the battery.

In some embodiments, the melting point of the material of the weak region is lower than the melting point of the material of the region on the escape cavity other than the weak region. Therefore, compared with the region on the escape cavity other than the weak region, the weak region is more sensitive to temperature, and when the pressure relief mechanism is actuated, the weak region is capable of being timely and quickly melted by the emission discharged from the pressure relief mechanism, so that the emission can be quickly discharged to the outside of the escape cavity, which is conducive to improving the safety performance of the battery.

In some embodiments, the weak region includes a through hole, and upon actuation of the pressure relief mechanism, the emission passes through the through hole to be discharged from the escape cavity. In this way, the through hole arranged on the escape cavity is used as a weak region, on the one hand, it is convenient for battery processing and assembling, and on the other hand, when the weak region is impacted by the emission from the pressure relief mechanism, the emission can pass through the through hole to be discharged to the outside of the escape cavity timely and quickly, which is conducive to improving the discharging efficiency of the emissions, thereby improving the safety of the battery.

In some embodiments, the weak region further includes a sealing structure for sealing the through hole, and the sealing structure is used for being destroyed when the pressure relief mechanism is actuated so that the emission of the battery cell passes through the through hole.

Through the sealing structure arranged in the embodiment of the present application, on the one hand, the sealing performance of the escape cavity can be maintained during normal use of the battery cell, and the impact of the external environment on the pressure relief mechanism by the through hole of the escape cavity can be avoided. On the other hand, when thermal runaway of the battery cell occurs, the emission discharged through the pressure relief mechanism can timely and smoothly destroy the sealing structure to expose the through hole, so that the emission can be discharged to the outside of the escape cavity through the through hole, thereby improving the safety of the battery.

In some embodiments, the through hole is filled with the sealing structure, so as to save the internal space of the battery, improve the space utilization rate of the battery, and facilitate the processing and assembling of the battery.

In some embodiments, the sealing structure is arranged on an inner surface of the escape cavity corresponding to the through hole; and/or, the sealing structure is arranged on an outer surface of the escape cavity corresponding to the through hole.

In this way, when the sealing structure is arranged on the inner surface of the escape cavity corresponding to the through hole, the sealing structure is closer to the pressure relief mechanism and is capable of being quickly destroyed by the emission discharged through the pressure relief mechanism. For example, the sealing structure is capable of quickly responding to the temperature of the battery cell, so that the sealing structure is quickly melted, which can avoid affecting the actuation of the pressure relief mechanism, and discharge the emission in timely and smoothly. When the sealing structure is arranged on the outer surface of the escape cavity corresponding to the through hole, the distance between the sealing structure and the pressure relief mechanism is capable of providing a deformation space for the actuation of the pressure relief mechanism, and avoiding affecting the normal function of the pressure relief mechanism. Secondly, when the sealing structure is arranged on the inner surface and the outer surface of the escape cavity corresponding to the through hole at the same time, the sealing performance of the escape cavity can be improved.

In some embodiments, the escape cavity includes a bottom wall opposite to the first wall, and in a second direction, at least two regions of the bottom wall are not equal in distance from a first plane where the first wall is located, wherein the second direction is perpendicular to the first wall.

In the embodiment of the present application, distances between different regions of the bottom wall and the first plane in the second direction can be reasonably set according to the amounts of emissions accumulated in different regions of the bottom wall of the escape cavity. For example, if the bottom wall of the escape cavity includes a first region and a second region, and when thermal runaway of the battery cell occurs, due to the effect of gravity, if the emission from the battery cell collected in the first region is more than the emission from the battery cell collected in the second region, the bottom wall of the escape cavity can be set so that the distance between the first region and the first plane is greater than the distance between the second region and the first plane, so as to avoid the impact of more emission in the first region on the pressure relief mechanism corresponding to the first region, and further avoid thermal spread caused by the accumulation of the emission discharged through the pressure relief mechanism in the escape cavity, which is conducive to improving the safety performance of the battery.

In some embodiments, in the first direction, the distance between at least a part of region of the bottom wall and the first plane gradually increases in the second direction, and/or, in the first direction, the distance between at least a part of region of the bottom wall and the first plane gradually decreases in the second direction. In this way, at least a part of region of the bottom wall is inclined in the first direction. Due to the effect of gravity, the emission discharged through the pressure relief mechanism can be accumulated in a specific region of the bottom wall of the escape cavity, and the distance from the specific region to the first plane is also relatively long. Therefore, the thermal impact on the battery cell can be reduced by controlling the specific accumulation region of the emission on the bottom wall of the escape cavity, so as to improve the safety of the battery.

In some embodiments, in the first direction, from the center of the bottom wall to an end portion of the bottom wall, the distance between the bottom wall and the first plane increases or decreases gradually in the second direction.

In the embodiment of the present application, due to the small size of the side wall at an end portion of the escape cavity in the first direction, the accumulation of the emission discharged through the pressure relief mechanism at the end portion position is more serious. Therefore, when the bottom wall of the escape cavity is arranged such that in the first direction, the distance between the bottom wall and the first plane in the second direction gradually increases from the center of the bottom wall to the end portion of the bottom wall, since the distance between an end portion region of the bottom wall and the first plane in the second direction is relatively large, when thermal runaway of the battery occurs, there is a relatively large space at the end portion position of the escape cavity in the first direction to accommodate the emission discharged through the pressure relief mechanism, thereby reducing the impact on the pressure relief mechanism and improving the safety of the battery. Correspondingly, when the bottom wall of the escape cavity is arranged that the distance between the bottom wall and the first plane in the second direction gradually decreases from the center of the bottom wall to both ends of the bottom wall, since the distance between a central region of the bottom wall and the first plane is large, and under the impact of gravity, the emission discharged through the pressure relief mechanism may move to the central region of the bottom wall, thereby reducing the impact on the pressure relief mechanism, and further improving the safety of the battery.

In some embodiments, the bottom wall includes an arc surface and/or a plane, so as to facilitate the smooth movement of the emission discharged by the pressure relief mechanism on the bottom wall of the escape cavity, and also facilitate the processing and assembling of the battery.

In some embodiments, the bottom wall is provided with a sedimentation groove with an opening facing the first wall, and in the second direction, the distance between a groove bottom wall of the sedimentation groove and the first plane is greater than the distance between a region on the bottom wall other than the sedimentation groove and the first plane.

In this way, by arranging the sedimentation groove with the opening facing the first wall on the bottom wall of the escape cavity, when the pressure relief mechanism is actuated, since there is a sedimentation groove with a certain depth on the bottom wall of the escape cavity, the sedimentation groove has the certain depth to accommodate the emission discharged through the pressure relief mechanism, thereby avoiding the accumulation of the emission on other regions on the bottom wall, reducing the impact on the pressure relief mechanism, and further improving the safety of the battery.

In some embodiments, the sedimentation groove is located at the end portion of the bottom wall in the first direction. In the embodiment of the present application, due to the small size of the side wall at the end portion of the escape cavity, the accumulation of high-temperature and high-pressure emission discharged through the pressure relief mechanism is more serious at the side wall of the end portion of the escape cavity. By arranging the sedimentation groove at the end portion position of the bottom wall in the first direction, the emission can be accumulated in the sedimentation groove, thereby reducing the thermal impact on the pressure relief mechanism, and further improving the safety of the battery.

In some embodiments, the bottom wall is provided with a plurality of sedimentation grooves arranged at intervals in the first direction. In the embodiment of the present application, according to the quantity of emissions accumulated in different regions of the bottom wall of the escape cavity, a plurality of sedimentation grooves may be arranged at different regions of the bottom wall, and the sedimentation grooves each have a certain depth to accommodate the emission discharged through the pressure relief mechanism. Therefore, when thermal runaway of the battery cell occurs, by arranging the sedimentation grooves for a plurality of regions with more emissions on the bottom wall of the escape cavity, it can effectively prevent the emissions in the plurality of regions from affecting the corresponding pressure relief mechanism, thereby avoiding the thermal spread caused by the accumulation of emission in the escape cavity, which is conducive to improving the safety of the battery.

In some embodiments, the battery further includes: a collection cavity for collecting the emission from the battery cell when the pressure relief mechanism is actuated; wherein the supporting member is further used for isolating the collection cavity from the electrical cavity. The collection cavity can concentratedly collect and/or treat the emission when the pressure relief mechanism is actuated, and then remove the emission to the outside of the battery. At the same time, the supporting member may be used as an isolation component to separate the electrical cavity containing the battery cells from the collection cavity collecting the emission, thereby avoiding the mutual influence between the two, preventing at least part of the emission from entering the electrical cavity from the collection cavity, and avoiding thermal spread.

In some embodiments, the battery further includes: a protective member, and the protective member is used for surrounding, together with the supporting member, to form the collection cavity. The collection cavity is formed by the protective member and the supporting member, which can effectively collect and buffer the emission discharged by the pressure relief mechanism, and reduce its danger. At the same time, the protective member can protect the supporting member so as to prevent the supporting member from being destroyed by a foreign matter.

In some embodiments, the supporting member is at least part of a wall of the box body, and the supporting member is used for allowing the emission from the battery cell to pass through the supporting member and be discharged to the outside of the box body when the pressure relief mechanism is actuated. In this way, by using the supporting member as at least part of the wall of the box body, the emission discharged through the pressure relief mechanism can be directly discharged to the outside of the box body through the supporting member, which can save the space of the battery and improve the space utilization rate of the box body, thereby facilitating the mounting of the battery and improving the processing efficiency of the battery.

In some embodiments, the supporting member is a thermal management component, and the thermal management component is used for adjusting the temperature of the battery cell. For example, the thermal management component can be used for reducing the temperature or increasing the temperature of the battery cell, so that the temperature of the battery is relatively stable, for improving the working efficiency of the battery.

In a second aspect, an electrical device is provided, including the battery described in the first aspect, and the battery is used for supplying electric energy to the electrical device.

In some embodiments, the electrical device may be a vehicle, a ship, or a spacecraft.

## BRIEF DESCRIPTION OF THE DRAWINGS

In order to illustrate technical solutions of embodiments of the present application more clearly, a brief introduction of drawings to be used in the embodiments of the present application will be made below. Apparently, the drawings described below are merely some embodiments of the present application, and other drawings can be obtained according to these drawings by those skilled in the art without creative efforts.

Fig. 1 is a schematic structural diagram of a vehicle disclosed in an embodiment of the present application;

Fig. 2 is a schematic structural diagram of a battery disclosed in an embodiment of the present application;

Fig. 3 is a schematic sectional diagram of a battery disclosed in an embodiment of the present application;

Fig. 4 is a schematic sectional diagram of a battery disclosed in another embodiment of the present application;

Fig. 5 is an exploded diagram of a battery cell disclosed in an embodiment of the present application;

Fig. 6 is a schematic sectional diagram of a battery disclosed in an embodiment of the present application;

Fig. 7 is an enlarged diagram of an example of a part A of the battery shown in Fig. 6 of the present application;

Fig. 8 is an enlarged diagram of another example of a part A of the battery shown in Fig. 6 of the present application;

Fig. 9 is an enlarged diagram of yet another example a part A of the battery shown in Fig. 6 of the present application;

Fig. 10 is a schematic structural diagram of an example of an escape cavity disclosed in an embodiment of the present application;

Fig. 11 is a schematic structural diagram of another example of an escape cavity disclosed in an embodiment of the present application;

Fig. 12 is a schematic structural diagram of yet another example of an escape cavity disclosed in an embodiment of the present application;

Fig. 13 is a schematic structural diagram of still another example of an escape cavity disclosed in an embodiment of the present application;

Fig. 14 is a schematic structural diagram of an escape cavity provided with a sedimentation groove disclosed in an embodiment of the present application;

Fig. 15 is a schematic structural diagram of an escape cavity provided with a sedimentation groove disclosed in another embodiment of the present application; and

Fig. 16 is a schematic structural diagram of an escape cavity provided with a sedimentation groove disclosed in yet another embodiment of the present application;

In the drawings, the drawings are not drawn to actual scale.

## DETAILED DESCRIPTION

The implementations of the present application are further described in detail below with reference to the drawings and embodiments. The following detailed description of the embodiments and the drawings are used for illustrating the principles of the present application by way of example, but should not be used for limiting the scope of the present application, that is, the present application is not limited to the described embodiments.

In the description of the present application, it should be noted that, unless otherwise stated, "a plurality of" means two or more; orientation or positional relationships indicated by terms "upper," "lower," "left," "right," "inner," and "outer" are only for facilitating the description of the present application and simplifying the description, rather than indicating or implying that the device or element referred to must have a particular orientation or be constructed and operated in a particular orientation, and therefore will not be interpreted as limitations to the present invention. In addition, the terms "first," "second," "third," and the like are used for descriptive purposes only, and cannot be construed as indicating or implying relative importance. "Vertical" is not strictly vertical, but within a margin of error allowed. "Parallel" is not strictly parallel, but within a margin of error allowed.

Orientation words appearing in the following description are directions shown in the drawings, and do not limit the specific structure of the present application. In the description of the present application, unless otherwise expressly specified and limited, the terms "mount," "connect," and "connection" should be broadly understood, for example, they may be a fixed connection or a detachable connection or an integral connection; or may be a direct connection or an indirect connection through an intermediate medium. For those of ordinary skill in the art, the specific meanings of the above terms in the present application may be understood according to specific circumstances.

In the embodiments of the present application, the same reference numerals denote the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, and width of the integrated device, are for illustrative purposes only, and should not constitute any limitation to the present application.

In the present application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell may be cylindrical, flat, rectangular, or in other shapes, which is not limited in the embodiments of the present application. The battery cell is generally classified into three types according to encapsulating manners: a cylindrical battery cell, a rectangular battery cell, and a pouch cell, which are not limited in the embodiments of the present application.

A battery mentioned in the embodiments of the present application refers to a single physical module including one or more battery cells for providing a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting charging or discharging of the battery cell.

The battery cell includes an electrode assembly and an electrolyte solution, and the electrode assembly is composed of a positive electrode plate, a negative electrode plate and a separator. The battery cell works mainly relying on movement of metal ions between the positive electrode plate and the negative electrode plate. The positive electrode plate includes a positive electrode current collector and a positive electrode active material layer. A surface of the positive electrode current collector is coated with the positive electrode active material layer. Current collectors not coated with the positive electrode active material layer protrude from the current collector coated with the positive electrode active material layer. The current collectors not coated with the positive electrode active material layer serve as positive tabs. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. Current collectors not coated with the negative electrode active material layer protrude from the current collector coated with the negative electrode active material layer. The current collectors not coated with the negative electrode active material layer serve as negative tabs. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (PP), polyethylene (PE), or the like. In addition, the electrode assembly may be of a wound structure or a laminated structure, which is not limited in the embodiments of the present application.

Many design factors, such as energy density, cycle life, discharge capacity, charge-discharge rate, and other performance parameters, should be considered in the development of the battery technologies. In addition, the safety of the battery also needs to be considered.

For the battery cell, the main safety hazard comes from charging and discharging processes, and at the same time, there is a suitable ambient temperature design. In order to effectively avoid unnecessary losses, there are generally at least three protection measures for the battery cell. Specifically, the protection measures include at least a switching element, selection of an appropriate isolation separator material, and a pressure relief mechanism. The switching element refers to an element that is capable of stopping charging or discharging the battery when the temperature or resistance inside the battery cell reaches a certain threshold. The separator is used for isolating the positive electrode plate and the negative electrode plate, and when the temperature rises to a certain value, it can automatically dissolve micron-scale (or even nano-scale) pores attached to it, so that metal ions cannot pass through the separator and terminate the internal reaction of the battery cell.

The pressure relief mechanism refers to an element or component that is actuated to relieve the internal pressure or temperature when the internal pressure or temperature of the battery cell reaches a predetermined threshold. The design of the threshold varies according to different design requirements. The threshold may depend on the material of one or a plurality of the positive electrode plate, the negative electrode plate, the electrolyte solution, and the separator in the battery cell. The pressure relief mechanism may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief mechanism performs an action or a weak structure arranged in the pressure relief mechanism is destroyed, thereby forming an opening or channel for releasing the internal pressure or temperature.

The "actuate" mentioned in the present application means that the pressure relief mechanism performs an action or is activated to a certain state, so that the internal pressure and temperature of the battery cell can be relieved. The action performed by the pressure relief mechanism may include, but is not limited to, at least a part of the pressure relief mechanism is ruptured, broken, torn, open, or the like. When the pressure relief mechanism is actuated, high-temperature and high-pressure substances inside the battery cell will be discharged from the actuated part as emissions. In this way, the pressure and temperature of the battery cell is capable of being relieved under controllable pressure or temperature, so as to prevent more serious potential accidents.

The emissions from the battery cell mentioned in the present application include, but are not limited to, the electrolyte solution, dissolved or split positive and negative electrode plates, fragments of the separator, high-temperature and high-pressure gas generated by reaction, flames, and the like.

The pressure relief mechanism on the battery cell has an important impact on the safety of the battery. For example, when a short circuit, overcharge, and the like occur, it may cause thermal runaway inside the battery cell, resulting in a sudden increase in the pressure or temperature. In this case, the internal pressure and temperature can be relieved outward through the actuation of the pressure relief mechanism.

During the normal use of the battery, it may be inevitably impacted by external forces, which will cause damages to the battery cell to a certain extent, and then affect the safety performance of the battery. For example, in some application scenarios, the battery can be installed on the chassis of an electric vehicle and provide power for the electric vehicle. The vehicle may be affected by bumps, flying stones and other adverse effects during driving, which will cause impact and bottom ball hitting on the battery.

In view of this, the embodiments of the present application provide a battery and an electrical device. The battery includes a box body, a battery cell group, and a supporting member. The battery cell group is accommodated in an electrical cavity of the box body, the battery cell group includes a plurality of battery cells arranged in a first direction, at least two battery cells in the battery cell group are each provided with a pressure relief mechanism, and the pressure relief mechanism is arranged on a first wall of the battery cell. The supporting member is attached to the first wall, the supporting member includes escape cavities corresponding to at least two of the pressure relief mechanisms in the battery cell group, and the escape cavities are used for providing deformation space for actuation of the at least two pressure relief mechanisms. In this way, in the embodiments of the present application, by arranging the supporting member in the battery, the supporting member being attached to the first wall of the battery cell, a supporting function may be provided for the battery cell, so that the first wall has a better compressive strength. When an external pressure is applied to the battery, the arranged supporting member can resist most or even all of the external pressure, thereby reducing or eliminating the impact of the external pressure on the battery cell, and improving the pressure resistance and safety performance of the battery. In addition, the pressure relief mechanism is further arranged on the first wall of the battery cell, and the supporting member is provided with escape cavities corresponding to at least two pressure relief mechanisms in the battery cell group. In this way, when the pressure relief mechanism is actuated, the escape cavity of the supporting member can be used for providing a deformation space for the pressure relief mechanism, so as to prevent the supporting member from blocking the pressure relief mechanism, so that an emission of the battery cell is capable of being smoothly discharged from the pressure relief mechanism.

The technical solutions described in the embodiments of the present application are all suitable for various electrical device using batteries.

The electrical device may be, but not limited to, a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer. The electrical device is not specially limited in the embodiments of the present application.

It should be understood that the technical solutions described in the embodiments of the present application are not only applicable to the electrical devices described above, but also applicable to all devices using batteries. However, for the sake of brevity, the following embodiments are described by taking the electrical device being a vehicle as an example.

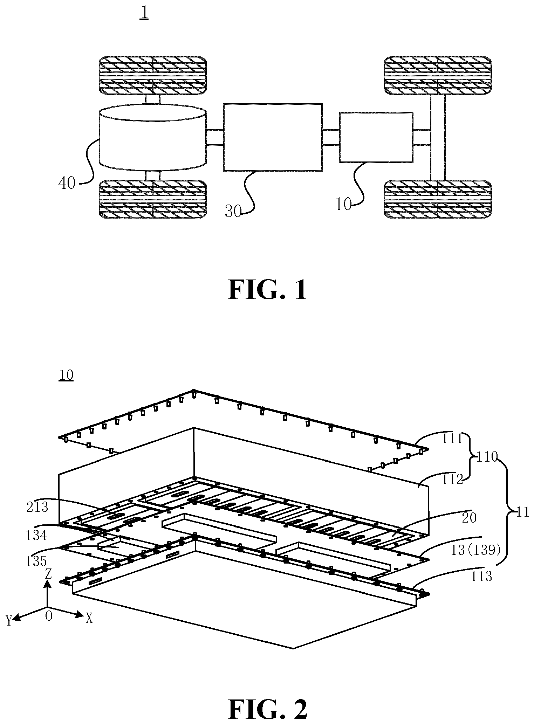

For example, as shown in Fig. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid electric vehicle, an extended-range electric vehicle, or the like. A motor 40, a controller 30, and a battery 10 may be arranged inside the vehicle 1, and the controller 30 is used for controlling the battery 10 to supply power to the motor 40. For example, the battery 10 may be arranged at the bottom or the head or the tail of the vehicle 1. The battery 10 may be used for supplying power to the vehicle 1, for example, the battery 10 may be used as an operating power source of the vehicle 1, which is used for a circuit system of the vehicle 1, for example, for operation power requirements of the vehicle 1 during starting, navigation, and running. In another example of the present application, the battery 10 can not only be used as the operating power source of the vehicle 1, but also can be used as a driving power source of the vehicle 1 to provide driving power for the vehicle 1 instead of or partially instead of fuel or natural gas.

In order to meet different power usage requirements, the battery 10 in the embodiment of the present application may be a battery cell group or a battery pack. The battery 10 may include at least one battery cell group, the battery cell group includes a plurality of battery cells, wherein the plurality of battery cells may be in series connection, in parallel connection, or in parallel-series connection to form the battery 10, and the parallel-series connection refers to mixing of the series connection and the parallel connection. The battery 10 may also be referred to as a battery pack. For example, the plurality of battery cells may be in series connection, parallel connection, or parallel-series connection to form battery modules first, and then the plurality of battery modules may then be in series connection, parallel connection, or parallel-series connection to form the battery 10. In other words, the plurality of battery cells may directly form the battery 10, or may form battery modules first, and then the battery modules form the battery 10.

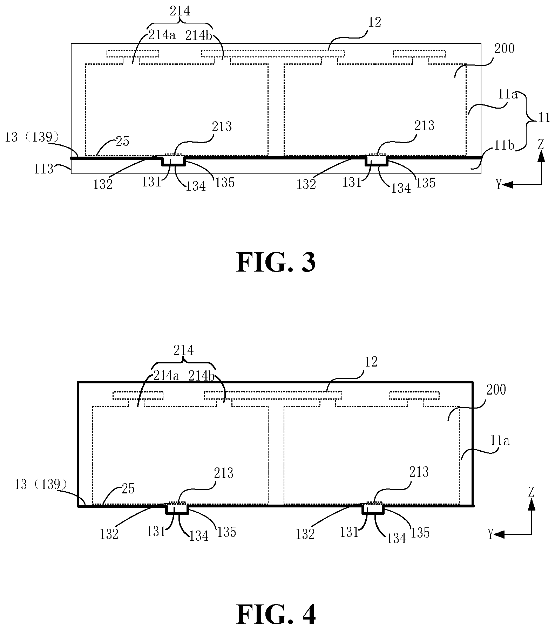

Fig. 2 shows a schematic exploded structural diagram of the battery 10 according to an embodiment of the present application; Fig. 3 shows a schematic cross-sectional view of the battery 10 according to an embodiment of the present application, and Fig. 4 shows a schematic cross-sectional view of another example of the embodiment 10 of the present application, for example, the battery 10 shown in FIG. 3 and FIG. 4 may be a schematic diagram of the battery 10 shown in FIG. 2.

As shown in Fig. 2 to Fig. 4, the battery 10 in the embodiment of the present application may include: a box body 11 including an electrical cavity; a battery cell group 200 accommodated in the electrical cavity 11a, the battery cell group 200 including a plurality of battery cells 20 arranged in a first direction X, at least two battery cells 20 in the battery cell group 200 being each provided with a pressure relief mechanism 213, and the pressure relief mechanism 213 being arranged on a first wall 25 of the battery cell 20; and a supporting member 13 attached to the first wall 25 to support the battery cell 20, the supporting member 13 including escape cavities 131 corresponding to at least two of the pressure relief mechanisms 213 in the battery cell group 200, and the escape cavities 131 being used for providing deformation space for actuation of the at least two pressure relief mechanisms 213.

It should be understood that the shape of the battery cell 20 in the embodiment of the present application may be set according to practical applications. For example, the battery cell 20 may be a polyhedron structure, and the polyhedron structure is surrounded by a plurality of walls. Therefore, the battery cell 20 may include a plurality of walls. The first wall 25 of the battery cell 20 is provided with the pressure relief mechanism 213. The first wall 25 may be any wall of the battery cell 20, for example, the first wall 25 may be the wall with the smallest area of the battery cell 20; or the first wall 25 may also be the wall with the largest area of the battery cell 20, which is not limited in the embodiment of the present application.

It should be understood that the electrical cavity 11a of the box body 11 in the embodiment of the present application is used for accommodating at least one battery cell 20, that is, the electrical cavity 11a provides a mounting space for the battery cell 20. The electrical cavity 11a may be sealed or not.

Optionally, the shape of the electrical cavity 11a may depend on the battery cells 20 accommodated. For example, as shown in Fig. 2 or Fig. 3, the electrical cavity 11a may be a hollow cuboid surrounded by at least six walls, so as to facilitate processing. Moreover, the electrical cavity 11a in the embodiment of the present application may be formed in various manners. For example, as shown in Fig. 2 and Fig. 3, the box body 11 may include a plurality of parts with the same or different shapes, and the parts are connected and snapped together to form a hollow cuboid, but the embodiment of the present application is not limited to this.

It should be understood that the electrical cavity 11a in the embodiment of the present application has no limitation on the quantity of the battery cells 20 accommodated. In addition, other components may also be arranged in the electrical cavity 11a, for example, the electrical cavity 11a may further include a structure for fixing the battery cell 20.

For another example, the electrical cavity 11a in the embodiment of the present application may further be used for accommodating a bus component 12, that is, the electrical cavity 11a provides a mounting space for the battery cell 20 and the bus component 12. The bus component 12 is used for realizing electrical connection between the plurality of battery cells 20, such as parallel connection, series connection, or parallel-series connection. The bus component 12 may realize electrical connection between the battery cells 20 by connecting electrode terminals 214 of the battery cells 20. In some embodiments, the bus component 12 may be fixed to the electrode terminals 214 of the battery cells 20 by welding.

It should be understood that the material of the supporting member 13 provided in the embodiment of the present application may be a material with good ductility and high strength, which can buffer and resist an external pressure, and has a high compressive strength. As an example, the material of the supporting member 13 may be a metal material, such as copper and aluminum. Alternatively, the material of the supporting member 13 may also be a non-metallic material with a certain strength, such as mica and ceramics.

The supporting member 13 in the embodiment of the present application includes an escape cavity 131, and the escape cavity 131 is used for providing a deformation space for the actuation of at least two of the pressure relief mechanisms 213. The "deformation space" involved in the embodiment of the present application refers to the space require by the pressure relief mechanism 213 in an actuation direction (that, the direction in which it is destroyed), either internally or externally, during actuation of the pressure relief mechanism 213 (for example, during which at least a part of the pressure relief mechanism 213 is destroyed).

In the embodiments of the present application, by arranging the supporting member 13 in the battery 10, the supporting member 13 being attached to the first wall 25 of the battery cell 20, a supporting function may be provided for the battery cell 20, so that the first wall 25 has a better compressive strength. When an external pressure is applied to the battery 10, the arranged supporting member 13 can resist most or even all of the external pressure, thereby reducing or eliminating the impact of the external pressure on the battery cell 20, and improving the pressure resistance and safety performance of the battery 10. In addition, the pressure relief mechanism 213 is further arranged on the first wall 25 of the battery cell 20, and the supporting member 13 is provided with escape cavities 131 corresponding to at least two pressure relief mechanisms 213 in the battery cell group 20. In this way, when the pressure relief mechanism 213 is actuated, the escape cavity 131 of the supporting member 13 can be used for providing a deformation space for the pressure relief mechanism 213, so as to prevent the supporting member 13 from blocking the pressure relief mechanism 213, so that an emission of the battery cell 20 is capable of being smoothly discharged from the pressure relief mechanism 213.

It should be understood that the box body 11 in the embodiment of the present application may be implemented in various manners, which is not limited in the embodiment of the present application. For example, taking Fig. 2 and Fig. 3 as an example, for the electrical cavity 11a, the box body 11 may include a first cover body 110 with an opening, and the supporting member 13 covers the opening of the first cover body 110 to form the electrical cavity 11a. In this way, the wall for forming the electrical cavity 11a includes the first cover body 110 and the supporting member 13. The first cover body 110 may also be realized in various manners. For example, the first cover body 110 may be a hollow integral structure with one end open; or, the first cover body 110 may also include a first part 111 and a second part 112 with openings at opposite sides respectively, and the first part 111 covers the opening at one side of the second part 112 to form the first cover body 110 with one end open, and the supporting member 13 covers the opening at the other side of the second part 112 to form the electrical cavity 11a.

For another example, unlike the above manner shown in Fig. 2 and Fig. 3, the box body 11 may also include a closed second cover body, and the second cover body may be used for forming the electrical cavity 11a. Alternatively, by arranging the supporting member 13 inside the second cover body, the electrical cavity 11a is formed by isolation from the interior of the second cover body. Further, a collection cavity 11b may also be formed by isolation. The second cover body may also be realized in various manners. For example, the second cover body may include a third part and a fourth part, one side of the fourth part has an opening to form a semi-closed structure, the supporting member 13 is provided inside the fourth part, and the third part covers the opening of the fourth part, thereby forming the closed second cover body.

Specifically, in some embodiments, as shown in Fig. 2 and Fig. 3, the battery 10 further includes: the collection cavity 11b used for collecting emissions from the battery cell 20 when the pressure relief mechanism 213 is actuated; wherein the supporting member 13 in the implementation of the present application is further used for isolating the collection cavity 11b and the electrical cavity 11a. The collection cavity 11b can concentratedly collect and/or treat the emission from the battery cell 20 when the pressure relief mechanism 213 is actuated, and then remove the emission to the outside of the battery 10. At the same time, the supporting member 13 in the embodiment of the present application may be used as an isolation component to separate the electrical cavity 11a accommodating the battery cells 20 from the collection cavity 11b collecting the emission, thereby avoiding the mutual influence between the two, preventing at least part of the emission from entering the electrical cavity 11a from the collection cavity 11b, and avoiding thermal spread.

It should be understood that the collection cavity 11b in the embodiment of the present application may be sealed or not. In some embodiments, the interior of the collection cavity 11b may include air or other gases. Optionally, the interior of the collection cavity 11b may also include liquid, such as a cooling medium or a component provided with the liquid, for further reducing the temperature of the emission entering the collection cavity 11b. Further optionally, the gas or liquid in the collection cavity 11b may be configured to flow circularly.

It should also be understood that, in the embodiment of the present application, the supporting member 13 may include a wall shared by the electrical cavity 11a and the collection cavity 11b, and the supporting member 13 or a part thereof may directly serve as the wall shared by the electrical cavity 11a and the collection cavity 11b; therefore, the distance between the electrical cavity 11a and the collection cavity 11b may be reduced, the space of the battery 10 may be saved, and the space utilization rate of the box body 11 may be improved.

Optionally, in some embodiments, the battery 10 further includes: a protective member 113, and the protective member 113 is used for surrounding, together with the supporting member 13, to form the collection cavity 11b. In the implementation of the present application, the collection cavity 11b is formed by the protective member 113 and the supporting member 13, which can effectively collect and buffer the emission discharged by the pressure relief mechanism 213, and reduce its danger. At the same time, the protective member 113 can protect the supporting member 13 so as to prevent the supporting member 13 from being destroyed by a foreign matter.

Optionally, in some embodiments, the supporting member 13 in the embodiments of the present application may be a thermal management component 139, and the thermal management component 139 is used for adjusting the temperature of the battery cell 20. For example, the thermal management component 139 can be used for reducing the temperature or increasing the temperature of the battery cell 20, so that the temperature of the battery 10 is relatively stable, for improving the working efficiency of the battery 10.

Specifically, the thermal management component 139 in the embodiment of the present application may contain fluid or solid-liquid phase change material to adjust the temperature of a plurality of batteries 20, or the thermal management component 139 may include a flow channel, and the flow channel may be used for accommodating the fluid or solid-liquid phase change material. The fluid may be liquid or gas. The solid-liquid phase change material is solid in an original state, and may become liquid after absorbing heat, and adjusting the temperature refers to heating or cooling the plurality of battery cells 20. In the case of cooling or lowering the temperature of the battery cells 20, the thermal management component 139 is used for accommodating a cooling fluid or solid-liquid phase change material to lower the temperature of the plurality of battery cells 20. In this case, the thermal management component 139 may also be referred to as a cooling component, a cooling system, a cooling plate, or the like, and the fluid accommodated therein may also be referred to as a cooling medium or a cooling fluid, and more specifically, may be referred to as a cooling liquid or a cooling gas. In addition, the thermal management component 139 in the embodiment of the present application may also be used for heating to raise the temperature of the plurality of battery cells 20, which is not limited in the embodiments of the present application. Optionally, the fluid may flow in a circulating manner to achieve a better temperature adjustment effect. Optionally, the fluid may be water, a mixture of water and ethylene glycol, air, or the like.

It should be understood that the connection manner of the thermal management component 139 to the battery cell 20 is not limited the embodiment of the present application. For example, the thermal management component 139 may be fixed to the battery cell 20 by an adhesive.

Optionally, in some embodiments, different from the above arrangement, as shown in Fig. 4, the supporting member 13 in the battery 10 may be at least a part of the wall of the box body 11, and the supporting member 13 is used for, when the pressure relief mechanism 213 is actuated, cause the emission from the battery cell 20 to pass through the supporting member 13 and be discharged from the box body 11. In the implementation of the present application, by using the supporting member 13 as at least part of the wall of the box body 11, the emission discharged through the pressure relief mechanism 213 can be directly discharged to the outside of the box body 11 through the supporting member 13, which can save the space of the battery 10 and improve the space utilization rate of the box body 11, thereby facilitating the mounting of the battery 10 and improving the processing efficiency of the battery 10. For example, when thermal runaway of the battery cell 20 occurs, the emission discharged through the pressure relief mechanism 213 may destroy at least a part of the supporting member 13 to discharge the emission to the outside of the box body 11. For another example, a balance valve may be arranged on the supporting member 13, and when the pressure relief mechanism 213 is actuated, the balance valve may be destroyed, so that the emission generated by the battery cell 20 is discharged to the outside of the box body 11 through the balance valve. It should be understood that the manner in which the emission is discharged to the outside of the box body 11 shown above is only an example, which is not limited in the embodiment of the present application.

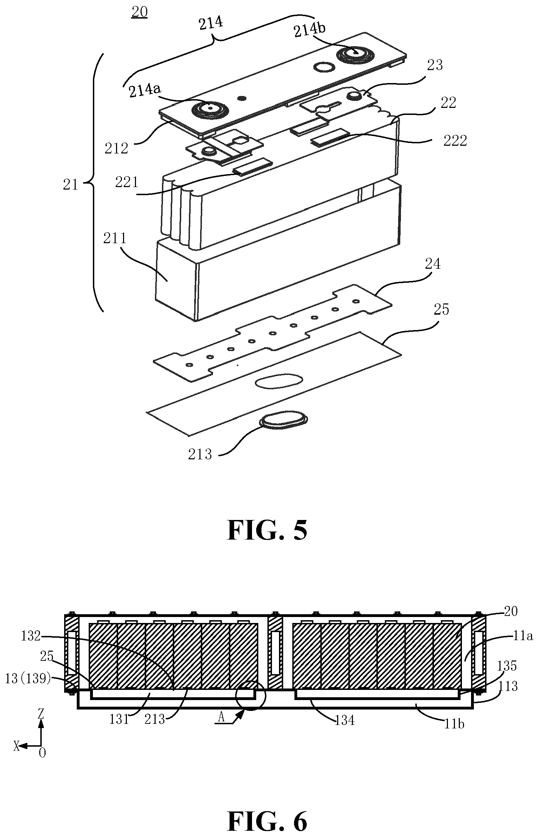

In the embodiment of the present application, the first wall 25 of the battery cell 20 is provided with the pressure relief mechanism 213. Fig. 5 shows a schematic exploded structural diagram of a battery cell 20 according to an embodiment of the present application. For example, the battery cell 20 shown in FIG. 5 may be any one of the battery cells 20 in the battery 10 shown in Fig. 2 to Fig. 4. As shown in Fig. 5, the battery cell 20 includes a shell 21, and the shell 21 may include a plurality of walls, that is, the hollow shell 21 is surrounded by a plurality of walls. The shell 21 may include a case 211 and a cover plate 212. Walls of the case 211 and the cover plate 212 are both referred to as walls of the battery cell 20. The shape of the case 211 may be determined according to the combined shape of one or a plurality of electrode assemblies 22 inside, for example, the case 211 may be a hollow cuboid or cube or cylinder, and at least one surface of the case 211 has an opening, so that one or a plurality of electrode assemblies 22 may be placed in the case 211. For example, when the case 211 is a hollow cuboid or cube, at least one plane of the case 211 is an open surface, that is, the open surface does not have a wall so that the interior of the case 211 is in communication with the exterior. When the shell 211 may be a hollow cylinder, each end surface of two end surfaces of the shell 211 may be an open surface, that is, the end surface does not have a wall so that the interior of the case 211 is in communication with the exterior. By arranging at least one cover plate 212, at least one opening of the case 211 may be covered respectively, and each cover plate 212 is connected to the case 211 to form a closed cavity for placing the electrode assembly 22. The case 211 is filled with an electrolyte, such as an electrolyte solution.

The pressure relief mechanism 213 is arranged on the first wall 25 of the battery cell 20 in the embodiment of the present application, and the pressure relief mechanism 213 is used for relieving the internal pressure or temperature when the internal pressure or temperature of the battery cell 20 reaches a threshold. Optionally, the first wall 25 may be any wall of the battery cell 20. For example, the first wall 25 may be the wall with the largest area of the battery cell 20. For another example, as shown in Fig. 5, the first wall 25 may be the wall with the smallest area of the battery cell 20, for example, the first wall 25 may be the bottom wall of the case 211 to facilitate mounting. For the convenience of description, the embodiment of the present application mainly takes the first wall 25 being the bottom wall of the case 211 of the battery cell 20 as an example. Moreover, for the convenience of illustration, the first wall 25 and the case 211 are separated in Fig. 5, but this does not limit whether the bottom side of the case 211 has an opening or not, that is, the bottom wall and the side wall of the case 211 may be an integral structure or may be two parts that are independent of each other and connected together.

Specifically, as shown in Fig. 5, the pressure relief mechanism 213 may be a part of the first wall 25, or may be a separate structure from the first wall 25, so as to be fixed to the first wall 25 by, for example, welding. When the pressure relief mechanism 213 is a part of the first wall 25, that is, the pressure relief mechanism 213 may be integrally formed with the first wall 25, the pressure relief mechanism 213 may be formed by setting a notch or a groove on the first wall 25, and the notch causes the thickness of the region of the first wall 25 where the pressure relief mechanism 213 is located to be smaller than the thickness of other regions of the first wall 25 other than the pressure relief mechanism 213. When the gas generated by the battery cell 20 is too much so that the internal pressure of the case 211 rises and reaches a threshold, or when the internal reaction of the battery cell 20 generates heat and the internal temperature of the battery cell 20 rises and reaches a threshold, the battery cell 20 may be ruptured at the notch, resulting in communication between the interior and the exterior of the shell 21, and the pressure and temperature of the gas are released outward through the rupture of the pressure relief mechanism 213.

Optionally, the pressure relief mechanism 213 in the embodiment of the present application may be various possible pressure relief structures, which is not limited in the embodiment of the present application. For example, the pressure relief mechanism 213 may be a temperature-sensitive pressure relief mechanism, and the temperature-sensitive pressure relief mechanism is configured to be capable of melting when the internal temperature of the battery cell 20 provided with the pressure relief mechanism 213 reaches a threshold; and/or, the pressure relief mechanism 213 may be a pressure-sensitive pressure relief mechanism, and the pressure-sensitive pressure relief mechanism is configured to be capable of rupturing when the internal air pressure of the battery cell 20 provided with the pressure relief mechanism 213 reaches a threshold.

Optionally, in an embodiment of the present application, in a case that the pressure relief mechanism 213 is arranged on the first wall 25 of the battery cell 20, the shell 21 of the battery cell 20 may further be provided with an electrode terminal 214, and a wall where the electrode terminal 214 is located may be the same as or different from the first wall 25. For example, as shown in Fig. 5, the embodiment of the present application is described by taking the wall where the electrode terminal 214 is located being different from the first wall 25 as an example. For example, the wall where the electrode terminal 214 is located is arranged opposite to the first wall 25, if the first wall 25 may be the bottom wall of the battery cell 20, the wall where the electrode terminal 214 is located may be the cover plate 212 of the battery cell 20, so that the emission discharged from the battery cell 20 through the pressure relief mechanism 213 will not affect the electrode terminal 214, so as to avoid short circuit and improve the safety of the battery cell 20.

Specifically, as shown in Fig. 5, the battery cell 20 may include at least two electrode terminals 214, and the at least two electrode terminals 214 may be arranged on the same wall, or may also be arranged on different walls. Fig. 5 takes the battery cell 20 including two electrode terminals 214 as an example, and the two electrode terminals 214 are arranged on the plate-shaped cover plate 212. The at least two electrode terminals 214 may include at least one positive electrode terminal 214a and at least one negative electrode terminal 214b.

The electrode terminal 214 in the embodiment of the present application is used for being electrically connected to the electrode assembly 22 to output electric energy. Each of the electrode terminals 214 is provided with a connection member 23, which may also be referred to as a current collecting member 23 located between the cover plate 212 and the electrode assembly 22, for implementing electrical connection between the electrode assembly 22 and the electrode terminal 214.

As shown in Fig. 5, each electrode assembly 22 has a first tab 221 and a second tab 222. The first tab 221 and the second tab 222 have opposite polarities. For example, when the first tab 221 is a positive tab, the second tab 222 is a negative tab. The first tab 221 of one or a plurality of electrode assemblies 22 is connected to one electrode terminal through a connection member 23, and the second tab 222 of the one or a plurality of electrode assemblies 22 is connected to another electrode terminal through another connection member 23. For example, the positive electrode terminal 214 is connected to the positive tab through one connection member 23, and the negative electrode terminal 214 is connected to the negative tab through another connection member 23.

In the battery cell 20, according to actual use requirements, it may be set that there is a single or a plurality of electrode assemblies 22, as shown in Fig. 5, the battery cell 20 is provided with 4 independent electrode assemblies 22, but this is not limited in the embodiment of the present application.

Optionally, as shown in Fig. 5, the battery cell 20 may further include a backing plate 24, and the backing plate 24 is located between the electrode assembly 22 and the bottom wall of the case 211, which may support the electrode assembly 22, and may also effectively prevent the electrode assembly 22 from interfering with rounded corners around the bottom wall of the case 211. In addition, the backing plate 24 may be provided with one or a plurality of through holes, for example, a plurality of evenly arranged through holes may be arranged. Alternatively, when the pressure relief mechanism 213 is arranged on the bottom wall of the case 211, a through hole is arranged in a position corresponding to the pressure relief mechanism 213 to facilitate guiding of the liquid and gas. Specifically, this enables the space of the upper surface of the backing plate 24 to be in communication with the space of the lower surface, and the gas generated inside the battery cell 20 and the electrolyte solution is capable of passing through the backing plate 24 freely.

Fig. 6 shows another schematic cross-sectional diagram of the battery 10 according to an embodiment of the present application. For example, the battery 10 shown in FIG. 6 may be the battery 10 shown in Fig. 2. For example, the section shown in Fig. 6 is perpendicular to the sections shown in Fig. 3 and Fig. 4. It should be understood that, in the embodiment of the present application, the section shown in FIG. 6 may be the section of the battery 10 perpendicular to a third direction Y, and the sections shown in Fig. 3 and Fig. 4 may be the section of the battery 10 perpendicular to the first direction X, wherein the first direction X is perpendicular to the third direction Y For example, the first direction X or the third direction Y may be an arrangement direction of the plurality of battery cells 20 in Fig. 2 or Fig. 6. The first direction X and the third direction Y may also be parallel to the first wall 25, that is, parallel to the first plane where the first wall 25 is located.

As shown in Fig. 2 to Fig. 6, the supporting member 13 in the embodiment of the present application is provided with an escape opening 132 on a surface close to the battery cell group 200, at least two of the pressure relief mechanisms 213 face the escape opening 132, and the escape cavity 131 is in communication with the escape opening 132. In this way, by arranging the escape opening 132 on the surface of the supporting member 13 close to the battery cell group 20, when the pressure relief mechanism 213 is actuated, the emission discharged from the pressure relief mechanism 213 can quickly enter the escape cavity 131 through the escape opening 132, for avoiding the emission from being accumulated in the electrical cavity 11a, and avoiding short circuit caused by the emission conducting electrical connecting components in the electrical cavity 11a, thereby improving the safety of the battery.

Optionally, as an embodiment, when the pressure relief mechanism 213 is actuated, the emission from the battery cell 20 enters the escape cavity 131 through the escape opening 132 and is then discharged from the escape cavity 131. When thermal runaway of the battery cell 20 occurs, due to a limited internal space of the escape cavity 131, the emission discharged through the pressure relief mechanism 213 is easy to accumulate in the escape cavity 131 and have a thermal impact on the pressure relief mechanism 213, which in turn causes thermal spread between the battery cells 20. In the embodiments of the present application, the emission quickly enters the escape cavity 131 through the escape opening 132, and the emission is discharged to the outside of the escape cavity 131, which is beneficial to avoid thermal spread caused by the accumulation of the emission in the escape cavity 131, thereby improving the safety of the battery 10.

Optionally, in an embodiment of the present application, the escape cavities 131 and/or escape openings 132 may be successively arranged in the first direction X. In this way, the escape cavities 131 are successively arranged in the first direction X, and the escape cavities 131 may correspond to a plurality of pressure relief mechanisms 213, and/or the escape openings 132 are successively arranged in the first direction X, and the escape openings 132 may correspond to a plurality of pressure relief mechanisms 213. Therefore, for the plurality of pressure relief mechanisms 213 arranged in the first direction X, it can be avoided that one or a plurality of pressure relief mechanisms 213 do not correspond to the escape cavity 131 or do not correspond to the escape opening 132, that is, the situation that the pressure relief mechanism 213 between two adjacent escape cavities 131 does not correspond to an escape cavity 131 is avoided, and the situation that the pressure relief mechanism 213 between two adjacent escape openings 132 does not correspond to an escape opening is further avoided, so that the emission discharged from each pressure relief mechanism 213 among the plurality of pressure relief mechanisms 213 arranged in the first direction X can enter the escape cavity 131 through the escape opening 132, and meanwhile, the structure is simple and convenient for processing and assembling of the battery 10.

It should be understood that, when the pressure relief mechanism 213 is actuated, the emission from the battery cell 20 enters the escape cavity 131 through the escape opening 132, and may be discharged from the escape cavity 131 in various manners. For example, the safety of the battery 10 may be ensured by properly arranging the escape cavity 131 to prevent the emission from the escape cavity 131 from destroying the battery 10.

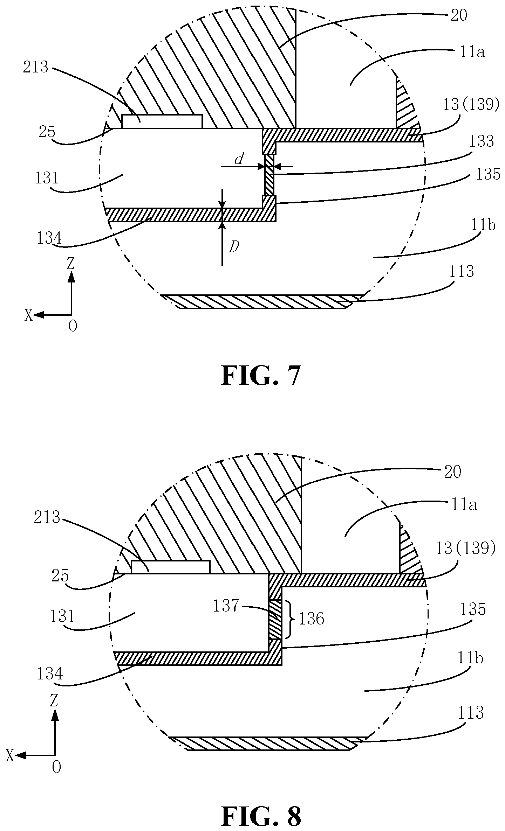

Fig. 7 shows a partially enlarged diagram of the battery 10 according to an embodiment of the present application, for example, Fig. 7 is an enlarged diagram of a region A shown in Fig. 6. Optionally, as shown in Fig. 6 and Fig. 7, as an embodiment, the escape cavity 131 in the embodiment of the present application may be provided with a weak region 133, and the weak region 133 is used for, when the pressure relief mechanism 213 is actuated, allowing the emission discharged from the pressure relief mechanism 213 to pass through the weak region 133 to be discharged from the escape cavity 131. In this way, when the thermal runaway of the battery cell 20 occurs, after the emission discharged from the pressure relief mechanism 212 enters the escape cavity 131, it may be discharged through the weak region 133 on the escape cavity 131, which can effectively avoid the thermal spread caused by the accumulation of the emission in the escape cavity 131, and can also achieve directional discharge. For example, the position of the weak region 133 can be reasonably set to discharge the emission from a specific region, for avoiding the impact of the emission on other components, thereby improving the safety of the battery 10.

Specifically, in the embodiment of the present application, the weak region 133 may be implemented in various manners. For example, as shown in Fig. 6 and Fig. 7, the weak region 133 may be used for being destroyed upon actuation of the pressure relief mechanism 213 to allow the emission to be discharged from the escape cavity 131. When the pressure relief mechanism 213 is not actuated, for example, during normal use of the battery, the escape cavity 131 is in a relatively sealed state, which can effectively protect the escape cavity 131 from being destroyed by an external force. When the pressure relief mechanism 213 is actuated, the strength of the weak region 133 on the escape cavity 131 is less than that of the region on the escape cavity 131 other than the weak region 133, and therefore, the weak region 133 is easily destroyed to allow the emission from the battery cell 20 to pass through the weak region 133 and then be discharged to the outside of the escape cavity 131.

Optionally, in the embodiment of the present application, the escape cavity 131 may include a bottom wall 134 and a side wall 135, the bottom wall 134 is arranged opposite to the first wall 25, the side wall 135 is connected to the bottom wall 134 and extends toward the first wall 25, and the weak region 133 is arranged on the bottom wall 134 and/or the side wall 135. When the weak region 133 is arranged on the bottom wall 134 of the escape cavity 131, when thermal runaway of the battery cell 20 occurs, the emission discharged by the pressure relief mechanism 213 is accumulated on the bottom wall 134 by gravity, and may directly pass through the weak region 133 of the bottom wall 134 of escape cavity 131 to be quickly discharged to the outside of the escape cavity 131, thereby improving the safety of the battery 10. In addition, in a case that thermal runaway of the battery cell 20 occurs, when the high-temperature and high-pressure emission discharged through the pressure relief mechanism 213 enters the escape cavity 213, it will be discharged toward the side wall 135 of the escape cavity 131, and due to the blocking effect of the side wall 135 of the escape cavity 131, the emission will accumulate in a region close to the side wall 135. Therefore, by arranging the weak region 133 on the side wall 135 of the escape cavity 131, it is conducive to discharging the emission in time, which effectively avoids the accumulation of the emission at the side wall 135 of the escape cavity 131.

In some embodiments, the weak region 133 may be arranged at an end portion of the bottom wall 134 and/or the side wall 135 in the first direction X. In the embodiment of the present application, as shown in Fig. 6 and Fig. 7, when the thermal runaway of the battery cell 20 occurs, due to the blocking of the emission by the side wall 135 of the escape cavity 131, the emission usually accumulates more seriously at the intersection of the bottom wall 134 and the side wall 135 of the escape cavity 131. At the same time, in some embodiments, due to the poor sealing of the intersection of the bottom wall 134 and the side wall 135 of the escape cavity 131, an air flow channel may be formed at a position where the sealing fails at the intersection, and under the action of a pressure difference of internal and external pressures, the airflow generated during the thermal runaway of the battery 10 may carry the emission to move towards the intersection of the bottom wall 134 and the side wall 135 of the escape cavity 131, which may intensify the accumulation of the emission at the intersection of the bottom wall 134 and the side wall 135 of the escape cavity 131. In addition, in a case that the plurality of pressure relief mechanisms 213 corresponding to the escape cavities 131 are arranged in the first direction X, the size of two side walls of the escape cavity 131 arranged opposite to each other in the first direction X is smaller than that of other walls, and therefore, the accumulation of the emission discharged through the pressure relief mechanism 213 at the end portion of the bottom wall 134 and/or side wall 135 of the escape cavity 131 in the first direction is the most serious, which generates a large influence on the pressure relief mechanism 213, and is easy to cause the thermal spread of the battery cell 20. Therefore, by arranging the weak region 133 at the end portion of the bottom wall 134 and/or the side wall 135 in the first direction X, the thermal spread caused by the accumulation of the emission in the escape cavity 131 is effectively prevented, thereby improving the safety of the battery 10.

Optionally, in the embodiment of the present application, the weak region 133 meets:

$$1 \times 10^{-4} \left( mm \cdot L \right) / Wh \leq d / E \leq 3 \times 10^{-3} \left( mm \cdot L \right) / Wh$$

wherein $d$ is the minimum thickness of the weak region 133, and $E$ is the volumetric energy density of the battery cell 20. By setting a value of $d/E$ reasonably, the emission generated by the battery cell 20 is capable of being discharged timely and smoothly, so as to improve the safety of the battery 10.

Specifically, if the value of $d/E$ is set too large, there may be a situation that the minimum thickness $d$ of the weak region 133 of the escape cavity 131 is set relatively large, while the volumetric energy density $E$ of the battery cell 20 is set relatively small. In this way, when the thermal runaway of the battery cell 20 occurs, the temperature or pressure of the discharged emission is relatively low. When the minimum thickness $d$ of the weak region 133 of the escape cavity 131 is set too large, it may be difficult for the emission to destroy the escape cavity 131 to discharge the emission in time, or it may take too long to destroy the escape cavity 131, which eventually leads to the emission being confined in the escape cavity 131 under the pressure relief mechanism 213, and the space of the escape cavity 131 is limited, the accumulated emission may generate an adverse impact to the corresponding battery cell 20, which easily causes a thermal spread phenomenon between battery cells 20. Therefore, the value of $d/E$ should not be set too large.

Conversely, the value of $d/E$ should not be set too small. Due to the structural limitation of the battery cell 20 itself, the volumetric energy density $E$ of the battery cell 20 has an upper limit value. Therefore, if the value of $d/E$ is set too small, that is, in a case that the volumetric energy density $E$ of the battery 10 is constant, the minimum thickness $d$ of the weak region 133 of the escape cavity 131 will be small, so that the escape cavity 131 is insufficient in structural strength, and is easy to be broken during normal use of the battery 10, thereby reducing the sealing performance of the escape cavity 131 and thus reducing the safety of the battery 10.

Therefore, the value of $d/E$ in the embodiment of the present application should not be set too large or too small, for example, the value of $d/E$ may be set as: $1\times10^{-4}(mm\cdot L)/Wh$, $1.1\times10^{-4}(mm\cdot L)/Wh$, $1.2\times10^{-4}(mm\cdot L)/Wh$, $1.3\times10^{-4}(mm\cdot L)/Wh$, $1.5\times10^{-4}(mm\cdot L)/Wh$, $1.7\times10^{-4}(mm\cdot L)/Wh$, $1.9\times10^{-4}(mm\cdot L)/Wh$, $2.0\times10^{-4}(mm\cdot L)/Wh$, $3.0\times10^{-4}(mm\cdot L)/Wh$, $4.0\times10^{-4}(mm\cdot L)/Wh$, $5.0\times10^{-4}(mm\cdot L)/Wh$, $5.5\times10^{-4}(mm\cdot L)/Wh$, $6.0\times10^{-4}(mm\cdot L)/Wh$, $6.5\times10^{-4}(mm\cdot L)/Wh$, $6.7\times10^{-4}(mm\cdot L)/Wh$, $7.0\times10^{-4}(mm\cdot L)/Wh$, $8.0\times10^{-4}(mm\cdot L)/Wh$, $9.0\times10^{-4}(mm\cdot L)/Wh$, $1\times10^{-3}(mm\cdot L)/Wh$, $1.3\times10^{-3}(mm\cdot L)/Wh$, $1.5\times10^{-3}(mm\cdot L)/Wh$, $1.7\times10^{-3}(mm\cdot L)/Wh$, $1.9\times10^{-3}(mm\cdot L)/Wh$, $2\times10^{-3}(mm\cdot L)/Wh$, $2.5\times10^{-3}(mm\cdot L)/Wh$, or $3\times10^{-3}(mm\cdot L)/Wh$, or its value is within a range obtained by combining any two values above.

For another example, the weak region 133 in the embodiment of the present application further meets:

$$1.3\times10^{-4}\left(mm\cdot L\right)/Wh \le d/E \le 2\times10^{-3}\left(mm\cdot L\right)/Wh$$

In the embodiment of the present application, the minimum thickness $d$ of the weak region 133 should not be set too large or too small, for example, a value range of the minimum thickness $d$ of the weak region 133 is [0.1 mm, 1.5 mm]; for another example, a value range of the minimum thickness $d$ of the weak region 133 may also be set to [0.13 mm, 1.0 mm], so that when thermal runaway of the battery cell 20 occurs, it takes less time for the emission generated to destroy the weak region 133. If the value of the minimum thickness $d$ of the weak region 133 is set too small, the strength of the weak region 131 may be insufficient, and the weak region 133 may be damaged and cracked under normal use of the battery 10, affecting the sealing performance of the escape cavity 131. If the minimum thickness $d$ of the weak region 133 is set too large, when thermal runaway of the battery cell 20 occurs, it is difficult for the generated emission to destroy the weak region 133 or it may take too long for the emission to destroy the weak region 133, which exacerbates the occurrence of thermal runaway of the battery 10. Therefore, the minimum thickness $d$ of the weak region 133 may be set to 0.1 mm, 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, or 1.5 mm, or its value is within a range obtained by combining any two of the above values.

In the embodiment of the present application, the volumetric energy density $E$ of the battery cell 20 should not be set too large or too small, and the volumetric energy density $E$ of the battery cell 20 may be set according to practical applications. For example, the value range of the volumetric energy density of the battery cell 20 is [500 Wh/L, 1000 Wh/L]. If the volumetric energy density $E$ of the battery cell 20 is set too small, the energy demand of the battery 10 cannot be met; if the volumetric energy density $E$ of the battery cell 20 is set too large, the difficulty in processing the battery cell 20 may be increased, which is difficult to achieve. Therefore, the volumetric energy density $E$ of the battery cell 20 may be set to 500 Wh/L, 550 Wh/L, 600 Wh/L, 650 Wh/L, 700 Wh/L, 750 Wh/L, 800 Wh/L, 850 Wh/L, 900 Wh/L, 950 Wh/L, or 1000 Wh/L, or its value is within a range obtained by combining any two of the above values.

Specifically, in an embodiment, when the weak region 133 in the battery 10 has different minimum thicknesses $d$ and different volumetric energy densities $E$, performance test results of the weak region 133 under the same experimental conditions are shown in Table 1.

Table 1: Performance Test Results of Different Embodiments and Comparative Embodiments

|  | d (mm) | E (Wh/L) | d/E | State of the weak region under vibration shock | State of the weak region under thermal runaway |
|---|---|---|---|---|---|
| Embodiment 1 | 0.1 | 1000 | $1.0\times10^{-4}$ | Not destroyed | Destroyed |
| Embodiment 2 | 0.1 | 750 | $1.3\times10^{-4}$ | Not destroyed | Destroyed |
| Embodiment 3 | 0.1 | 500 | $2.0\times10^{-4}$ | Not destroyed | Destroyed |
| Embodiment 4 | 0.5 | 1000 | $5.0\times10^{-4}$ | Not destroyed | Destroyed |
| Embodiment 5 | 0.5 | 750 | $6.7\times10^{-4}$ | Not destroyed | Destroyed |
| Embodiment 6 | 0.5 | 500 | $1.0\times10^{-3}$ | Not destroyed | Destroyed |
| Embodiment 7 | 1.5 | 1000 | $1.5\times10^{-3}$ | Not destroyed | Destroyed |
| Embodiment 8 | 1.5 | 750 | $2.0\times10^{-3}$ | Not destroyed | Destroyed |
| Embodiment 9 | 1.5 | 500 | $3.0\times10^{-3}$ | Not destroyed | Destroyed |

(continued)

| | d (mm) | E (Wh/L) | d/E | State of the weak region under vibration shock | State of the weak region under thermal runaway |
|---|---|---|---|---|---|
| Comparative Embodiment 1 | 0.08 | 1000 | $8.0\times10^{-5}$ | Destroyed | Destroyed |
| Comparative Embodiment 2 | 0.06 | 1000 | $6.0\times10^{-5}$ | Destroyed | Destroyed |
| Comparative Embodiment 3 | 0.04 | 1000 | $4.0\times10^{-5}$ | Destroyed | Destroyed |
| Comparative Embodiment 4 | 1.7 | 500 | $3.4\times10^{-3}$ | Not destroyed | Not destroyed |
| Comparative Embodiment 5 | 1.9 | 500 | $3.8\times10^{-3}$ | Not destroyed | Not destroyed |
| Comparative Embodiment 6 | 2.1 | 500 | $4.2\times10^{-3}$ | Not destroyed | Not destroyed |

As shown in Table 1 above, the first column of data represents the value of the minimum thickness $d$ of the weak region 133 in different embodiments and comparative embodiments; the second column of data represents the value of the volumetric energy density $E$ of the battery cell 20 in different embodiments and comparative embodiments; the third column of data represents a ratio of the minimum thickness $d$ of the weak region 133 to the volumetric energy density $E$ of the battery cell 20 in different embodiments and comparative embodiments; the fourth column represents the performance test results of the weak region 133 in different embodiments and comparative embodiments under an experimental condition of simulating vibration shock, wherein the vibration shock simulates an external force that the battery 10 may be subjected to during normal use, and the test results include that the weak region 133 is not destroyed and the weak region 133 is destroyed; and the fifth column represents performance test results of the weak region 133 in different embodiments and comparative embodiments under an experimental condition of simulating thermal runaway of the battery cell 20, and the test results include that the weak region 133 is destroyed by the emission discharged through the pressure relief mechanism 213 and the weak region 133 is not destroyed by the emission discharged through the pressure relief mechanism 213.

The value range of $d/E$ in Embodiment 1 to Embodiment 9 is $[1\times10^{-4}(mm\cdot L)/Wh, 3\times10^{-3}(mm\cdot L)/Wh]$, under the experimental condition of simulating vibration shock, the weak region 133 in the battery 10 corresponding to Embodiment 1 to Embodiment 9 is not destroyed, that is, the weak region 133 may guarantee good performance during the normal use of the battery 10; at the same time, under the experimental condition of simulating the thermal runaway of the battery cell 20, the emission discharged by the pressure relief mechanism 213 may timely and successfully destroy the weak region 133 of the escape cavity 131, and the emission may be discharged to the outside of the escape cavity 131 in time, thereby avoiding the occurrence of the thermal spread phenomenon of the battery 10.

As shown in Table 1 above, the values of $d/E$ in Comparative Embodiment 1 to Comparative Embodiment 3 are $8.0\times10^{-5}(mm\cdot L)/Wh$, $6.0\times10^{-5}(mm\cdot L)/Wh$, and $4.0\times10^{-5}(mm\cdot L)/Wh$ respectively. Due to the small value of $d/E$, under the experimental condition of simulating vibration shock, the weak region 133 of the escape cavity 131 in the battery 10 corresponding to the Comparative Embodiment 1 to the Comparative Embodiment 3 is destroyed. At this time, the weak region 133 on the escape cavity 131 has a low strength and is prone to breakage under normal driving conditions of the vehicle, which affects the sealing performance of the escape cavity 131 and further reduces the safety of the battery 10. Secondly, the values of $d/E$ in Comparative Embodiment 4 to Comparative Embodiment 6 are $3.4\times10^{-3}(mm\cdot L)/Wh$, $3.8\times10^{-3}(mm\cdot L)/Wh$, and $4.2\times10^{-3}(mm\cdot L)/Wh$ respectively. At this time, due to the large value of $d/E$, under the experimental condition of simulating the thermal runaway of the battery cell 20, the emission discharged through the pressure relief mechanism 213 is difficult to destroy the weak region 133 to discharge the emission to the outside of the escape cavity 131, so that a large quantity of emissions accumulate inside the escape cavity 131, which may lead to thermal spread of the battery 10, and further affect the safety of the battery 10. Therefore, in order to ensure the safety of the battery 10, the value of $d/E$ in the embodiment of the present application should not be too large or too small.

Optionally, in the embodiment of the present application, the weak region 133 meets:

$$0.1(°C\cdot L)/Wh \leq T_1/E \leq 1.2(°C\cdot L)/Wh$$

wherein, wherein $T_1$ is the melting point of the material of the weak region 133, and $E$ is the volumetric energy density of the battery cell 20. By setting the value of $T_1/E$ reasonably, the emission generated by the battery cell 20 is capable of being discharged timely and smoothly, so as to improve the safety of the battery 10.

Specifically, if the value of $T_1/E$ is too small, due to the structural limitation of the battery cell 20 itself, the volumetric energy density $E$ of the battery cell has an upper limit value. That is, when the volumetric energy density $E$ of the battery cell 20 is constant, the value of the melting point $T_1$ of the material in the weak region 133 of the escape cavity 131 will be small, which may increase the difficulty in material selection on the one hand, and may also make the structural strength of the escape cavity 131 insufficient on the other hand. The temperature of the battery 10 may rise under normal use, such as during charging and discharging, of the battery 10, the weak region 133 of the escape cavity 131 is likely to be softened or melted during normal use of the battery 10, which reduces the sealing performance of the escape cavity 131 and reduces the safety of the battery 10.

In contrast, if the value of $T_1/E$ is too large, that is, the melting point $T_1$ of the material in the weak region 133 of the escape cavity 131 is set relatively high, and the volumetric energy density $E$ of the battery cell 20 is set relatively small, correspondingly, when the thermal runaway of the battery cell 20 occurs, the temperature of the emission discharged from the pressure relief mechanism 213 is relatively low. When the melting point $T_1$ of the material in the weak region 133 of the escape cavity 131 is set too high, it may be difficult for the emission to melt the weak region 133 of the escape cavity 131 and discharge the emission in time, or it may take too long to melt the weak region 133 of the escape cavity 131, which in turn causes the emission to be confined in the escape cavity 131 corresponding to the pressure relief mechanism 213, and the space of the escape cavity 131 is limited, so that thermal impact is generated to the pressure relief mechanism 213, thereby easily causing the thermal spread phenomenon between the battery cells 20.

Therefore, the value of $T_1/E$ in the embodiment of the present application should not be set too large or too small, for example, the value of $T_1/E$ may be set to: 0.10(°C·L)/Wh, 0.11(°C·L)/Wh, 0.12(°C·L)/Wh, 0.13(°C·L)/Wh, 0.14(°C·L)/Wh, 0.15(°C·L)/Wh, 0.16(°C·L)/Wh, 0.17(°C·L)/Wh, 0.18(°C·L)/Wh, 0.19(°C·L)/Wh, 0.20(°C·L)/Wh, 0.24(°C·L)/Wh, 0.26(°C·L)/Wh, 0.28(°C·L)/Wh, 0.30(°C·L)/Wh, 0.40(°C·L)/Wh, 0.50(°C·L)/Wh, 0.60(°C·L)/Wh, 0.70(°C·L)/Wh, 0.80(°C·L)/Wh, 0.90(°C·L)/Wh, 1.0(°C·L)/Wh, 1.1(°C·L)/Wh, or 1.2(°C·L)/Wh, or its value is within a range obtained by combining any two values above.

In the embodiment of the present application, the melting point $T_1$ of the material of the weak region 133 should not be set too large or too small, for example, a value range of the melting point $T_1$ of the weak region 133 is [100°C, 600°C]; for another example, a value range of the melting point $T_1$ of the weak region 133 may also be set to [100°C, 400°C], so that when thermal runaway of the battery cell 20 occurs, it takes less time for the emission generated to destroy the weak region 133. If the melting point $T_1$ of the weak region 133 is set too small, the weak region 133 may be softened or melted under normal use of the battery, affecting the sealing performance of the escape cavity 131. If the melting point $T_1$ of the weak region 133 is set too large, when thermal runaway of the battery cell 20 occurs, the generated emission cannot melt the weak region 133 or it may take too long for the emission to melt the weak region 133, which may cause the occurrence of thermal spread of the battery 10. Therefore, the melting point $T_1$ of the weak region 133 may be set to 100°C, 200°C, 300°C, 400°C, 500°C, or 600°C, or its value is within a range obtained by combining any two values above.

It should be understood that the value range of the volumetric energy density $E$ of the battery cell 20 involved in the embodiment of the present application has been described in detail above, and will not be repeated here to avoid repetition.

Specifically, in an embodiment, when the weak region 133 in the battery 10 has different material melting points $T_1$ and different volumetric energy densities $E$, performance test results of the weak region 133 under the same experimental conditions are shown in Table 2.

Table 2: Performance Test Results of Different Embodiments and Comparative Embodiments.

| | $T_1(°C)$ | $E(Wh/L)$ | $T_1/E$ | State of the weak region under vibration shock | State of the weak region under thermal runaway |
|---|---|---|---|---|---|
| Embodiment 1 | 100 | 1000 | 0.10 | Not destroyed | Destroyed |
| Embodiment 2 | 100 | 750 | 0.13 | Not destroyed | Destroyed |
| Embodiment 3 | 100 | 500 | 0.20 | Not destroyed | Destroyed |
| Embodiment 4 | 300 | 1000 | 0.30 | Not destroyed | Destroyed |
| Embodiment 5 | 300 | 750 | 0.40 | Not destroyed | Destroyed |
| Embodiment 6 | 300 | 500 | 0.60 | Not destroyed | Destroyed |

(continued)

| | $T_1(°C)$ | $E(Wh/L)$ | $T_1/E$ | State of the weak region under vibration shock | State of the weak region under thermal runaway |
|---|---|---|---|---|---|
| Embodiment 7 | 600 | 1000 | 0.60 | Not destroyed | Destroyed |
| Embodiment 8 | 600 | 750 | 0.80 | Not destroyed | Destroyed |
| Embodiment 9 | 600 | 500 | 1.20 | Not destroyed | Destroyed |
| Comparative Embodiment 1 | 80 | 1000 | 0.08 | Destroyed | Destroyed |
| Comparative Embodiment 2 | 60 | 1000 | 0.06 | Destroyed | Destroyed |
| Comparative Embodiment 3 | 40 | 1000 | 0.04 | Destroyed | Destroyed |
| Comparative Embodiment 4 | 700 | 500 | 1.40 | Not destroyed | Not destroyed |
| Comparative Embodiment 5 | 800 | 500 | 1.60 | Not destroyed | Not destroyed |
| Comparative Embodiment 6 | 1000 | 500 | 2.00 | Not destroyed | Not destroyed |

As shown in Table 2 above, the first column of data represents the value of the melting point $T_1$ of the material of the weak region 133 in different embodiments and comparative embodiments; the second column of data represents the value of the volumetric energy density $E$ of the battery cell 20 in different embodiments and comparative embodiments; the third column of data represents a ratio of the melting point $T_1$ of the weak region 133 to the volumetric energy density $E$ of the battery cell 20 in different embodiments and comparative embodiments; the fourth column represents the performance test results of the weak region 133 in different embodiments and comparative embodiments under an experimental condition of simulating vibration shock, wherein the vibration shock simulates an external force that the battery 10 may be subjected to during normal use, and the test results include that the weak region 133 is not destroyed and the weak region 133 is destroyed (melted or softened); and the fifth column represents performance test results of the weak region 133 in different embodiments and comparative embodiments under an experimental condition of simulating thermal runaway of the battery cell 20, and the test results include that the weak region 133 is destroyed by the emission discharged through the pressure relief mechanism 213 and the weak region 133 is not destroyed by the emission discharged through the pressure relief mechanism 213.

The value range of $T_1/E$ in Embodiment 1 to Embodiment 9 is [0.10($°C·L$)/$Wh$, 1.20($°C·L$)/$Wh$], and under the experimental condition of simulating vibration shock, the weak region 133 in the battery 10 corresponding to Embodiment 1 to Embodiment 9 is not destroyed; at the same time, under the experimental condition of simulating the thermal runaway of the battery cell 20, the emission discharged by the pressure relief mechanism 213 may timely and successfully destroy the weak region 133 of the escape cavity 131, and the emission may be discharged to the outside of the escape cavity 131 in time, thereby avoiding the occurrence of the thermal spread phenomenon of the battery 10.

As shown in Table 2 above, the values of $T_1/E$ in Comparative Embodiment 1 to Comparative Embodiment 3 are 0.08($°C·L$)/$Wh$, 0.06($°C·L$)/$Wh$, and 0.04($°C·L$)/$Wh$ respectively. Due to the small value of $T_1/E$, under the experimental condition of simulating vibration shock, the weak region 133 of the escape cavity 131 corresponding to the Comparative Embodiment 1 to the Comparative Embodiment 3 is destroyed (softened or melted), which affects the sealing performance of the escape cavity 131 and further reduces the safety of the battery 10. Secondly, the values of $T_1/E$ in Comparative Embodiment 4 to Comparative Embodiment 6 are 1.40($°C·L$)/$Wh$, 1.60($°C·L$)/$Wh$, and 2.00($°C·L$)/$Wh$ respectively. Due to the large value of $T_1/E$, under the experimental condition of simulating the thermal runaway of the battery cell 20, the emission discharged through the pressure relief mechanism 213 does not destroy (is hard to melt or hard to melt in time) the weak region 133 of the escape cavity 131, so that a large quantity of emissions accumulate inside the escape cavity 131, which may lead to the occurrence of the thermal spread phenomenon of the battery 10. Therefore, in order to ensure the safety of the battery 10, the value of $T_1/E$ in the embodiment of the present application should not be too large or too small.

Optionally, in the embodiment of the present application, the manner of implementing the weak region 133 of the escape cavity 131 may be flexibly set according to practical applications. For example, the thickness of the weak region 133 may be set to be smaller than the thickness of the region on the escape cavity 131 other than the weak region 133, so as to facilitate the processing and assembling of the battery 10. Exemplarily, when the weak region 133 is arranged on the side wall 135 of the escape cavity 131 in the first direction, during use of the battery 10, the impact force of the external environment received by the bottom wall 134 of the escape cavity 131 is generally greater than that received by the side wall 135 of the escape cavity 131, in order to ensure the structural strength of the escape cavity 131, the thickness of the bottom wall 134 of the escape cavity 131 may be set to be greater than the thickness of the weak region 133 on the side wall 135. Correspondingly, in order to ensure that the emission can break through the weak region 133 timely and smoothly when thermal runaway of the battery cell 20 occurs, the minimum thickness $D$ of the bottom wall 134 of the escape cavity 131 may be set to meet $d \leq (D - 0.2mm)$.

Optionally, in the embodiment of the present application, the melting point of the material of the weak region 133 may be set to be lower than the melting point of the material of the region on the escape cavity 131 other than the weak region 133. Therefore, compared with the region on the escape cavity 131 other than the weak region 133, the weak region 133 is more sensitive to temperature, and when the pressure relief mechanism 213 is actuated, the weak region 133 is capable of being timely and quickly melted by the emission discharged from the pressure relief mechanism 213, so that the emission can be quickly discharged to the outside of the escape cavity 131, which is conducive to improving the safety performance of the battery 10. Exemplarily, when the weak region 133 is arranged on the side wall 135 of the escape cavity 131 in the first direction X, when thermal runaway of the battery cell 20 occurs, the severity of the thermal shock received by the bottom wall 134 of the escape cavity 131 is greater than that received by the side wall 135 of the escape cavity 131, and therefore, in order to ensure that the emission discharged through the pressure relief mechanism 213 can quickly melt the material of the weak region 133 on the side wall 135 of the escape cavity 131, the melting point of the material of the bottom wall 134 of the escape cavity 131 should be set higher than the melting point of the material of the weak region 133 on the side wall 135.

It should be understood that the above arranging manners of the weak region 133 involved in the embodiment of the present application may be used independently, or may also be used in combination. For example, the weak region 133 in the embodiment of the present application may also be improved by adopting a solution of the combination of setting the melting point of the material of the weak region 133 to be lower and reducing the thickness of the weak region 133, which is not limited in the embodiment of the present application.

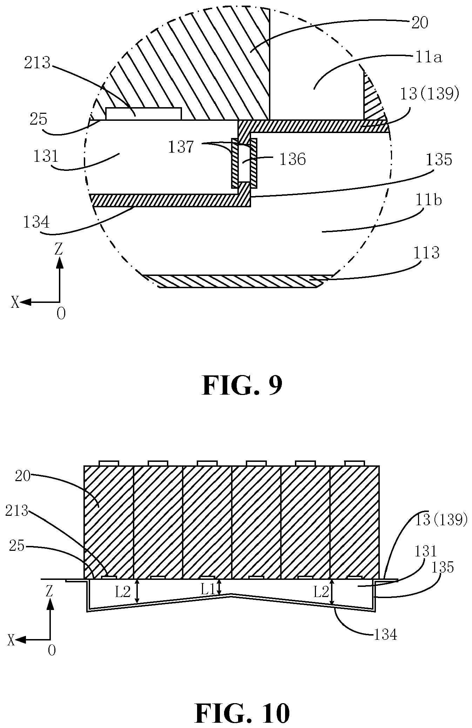

Fig. 8 and Fig. 9 respectively show partially enlarged diagrams of the battery 10 according to an embodiment of the present application, for example, Fig. 8 and Fig. 9 may be enlarged diagrams of the region A in the battery 10 shown in Fig. 6. As shown in Fig. 8 and Fig. 9, the weak region of the escape cavity 131 may include a through hole 136, and when the pressure relief mechanism 213 is actuated, the emission discharged through the pressure relief mechanism 213 can pass through the through hole 136 to be discharged from the escape cavity 131. In the embodiment of the present application, the through hole 136 arranged on the escape cavity 131 is used as the weak region 133, on the one hand, it is convenient for processing and assembling of the battery 10, and on the other hand, when the weak region 133 is impacted by the emission from the pressure relief mechanism 213, the emission can pass through the through hole 136 to be discharged to the outside of the escape cavity 131 timely and quickly, which is conducive to improving the discharging efficiency of the emissions, thereby improving the safety of the battery 10.

Optionally, as an embodiment, as shown in Fig. 8 and Fig. 9, the weak region 133 of the escape cavity 131 further includes a sealing structure 137 for sealing the through hole 136, and the sealing structure 137 is used for being destroyed when the pressure relief mechanism 213 is actuated so that the emission of the battery cell 20 passes by the through hole 136. Through the sealing structure 137 arranged in the embodiment of the present application, on the one hand, the sealing performance of the escape cavity 131 can be maintained during normal use of the battery cell 20, and the impact of the external environment on the pressure relief mechanism 213 by the through hole 136 of the escape cavity 131 can be avoided. On the other hand, when thermal runaway of the battery cell 20 occurs, the emission discharged through the pressure relief mechanism 213 can timely and smoothly destroy the sealing structure 137 to expose the through hole 136, so that the emission can be discharged to the outside of the escape cavity 131 through the through hole 136, thereby improving the safety of the battery 10.

Optionally, in some embodiments, as shown in Fig. 8, the above through hole 136 may be filled with the sealing structure 137 in the embodiment of the present application, so as to save the internal space of the battery 10, improve the space utilization rate of the battery 10, and facilitate the processing and assembling of the battery 10.

Optionally, in some embodiments, as shown in Fig. 9, the sealing structure 137 in the embodiment of the present application may be arranged on an inner surface of the escape cavity 131 corresponding to the through hole 136; and/or, the sealing structure 137 is arranged on an outer surface of the escape cavity 131 corresponding to the through hole 136. In the embodiment of the present application, when the sealing structure 137 is arranged on the inner surface of the escape cavity 131 corresponding to the through hole 136, the sealing structure 137 is closer to the pressure relief mechanism 213 and therefore is capable of being quickly destroyed by the emission discharged through the pressure relief mechanism 213. For example, the sealing structure 137 is capable of quickly responding to the temperature of the battery cell 20, so that the sealing structure 137 is quickly melted, which can avoid affecting the actuation of the pressure relief mechanism 213, and discharge the emission in timely and smoothly. When the sealing structure 137 is arranged on the outer surface of the escape cavity 131 corresponding to the through hole 136, the distance between the sealing structure 137 and the pressure relief mechanism 213 is capable of providing a deformation space for the actuation of the pressure relief mechanism 213, and avoiding affecting the normal function of the pressure relief mechanism 213. Secondly, when the sealing structure 137 is arranged on the inner surface and the outer surface of the escape cavity 131 corresponding to the through hole 136 at the same time, the sealing performance of the escape cavity 131 can be improved.

Exemplarily, as shown in Fig. 9, the sealing structure 137 in the embodiment of the present application may be arranged on the inner surface and the outer surface of the escape cavity 131 corresponding to the through hole 136 at the same time, which, as an example, is not limited in the embodiment of the present application.

It should be understood that, as shown in Fig. 9, the inner surface corresponding to the through hole 136 in the embodiment of the present application is: a surface of the escape cavity 131 corresponding to the through hole 136 and facing the interior of the escape cavity 131 in the first direction X, and the outer surface corresponding to the through hole 136 is: a surface of the escape cavity 131 corresponding to the through hole 136 and away from the interior of the escape cavity 131 in the first direction X.

It should be understood that the material of the sealing structure 137 in the embodiment of the present application may be set according to practical applications. For example, the sealing structure 137 in the embodiment of the present application may include: polypropylene (PP), with a melting point of about 190°C; polyfluoroalkoxy (PFA), with a melting point of about 300°C; polyimide (PI), with a melting point of about 350°C; silicone rubber (with a melting point of about 350°C); fluororubber (with a melting point of about 400°C); or tin (with a melting point of about 232°C), and the like. Secondly, in the embodiment of the present application, the material of the region on the escape cavity 131 other than the weak region 133 or the sealing structure 137 may be aluminum alloy (with a melting point of 660°C), which, as an example, is not limited in the embodiment of the present application.

It should be further understood that the through hole 136 may be filled with the sealing structure 137 in the embodiment of the present application by embedding through an adhesive, or the sealing structure 137 may be fixed to the inner surface of the escape cavity 131 corresponding to the through hole 136 and/or fixed to the outer surface of the escape cavity 131 corresponding to the through hole 136 through an adhesive. Exemplarily, the material of the adhesive involved in the embodiment of the present application may include: epoxy structural adhesive, acrylate structural adhesive, polyimide structural adhesive, maleimide structural adhesive, polyurethane structural adhesive, acrylic glue, or the like, which, as an example, is not limited in the embodiment of the present application.

The manner of arranging the bottom wall 134 of the escape cavity 131 in the embodiment of the present application will be described in detail below with reference to the drawings. Fig. 10 to Fig. 13 respectively show schematic cross-sectional diagrams of the battery 10 according to an embodiment of the present application. The battery 10 shown in Fig. 10 to Fig. 13 may be the battery 10 shown in Fig. 2, and sections shown in Fig. 10 to Fig. 13 are all cross-sectional diagrams of the battery 10 perpendicular to the third direction Y For example, the sections shown in Fig. 10 to Fig. 13 are perpendicular to the sections shown in Fig. 3 or Fig. 4. Moreover, the sections shown in Fig. 10 to Fig. 13 are parallel to the section shown in Fig. 6.

Optionally, as an embodiment, the escape cavity 131 in the embodiment of the present application includes a bottom wall 134 arranged opposite to the first wall 25, and in a second direction Z, at least two regions of the bottom wall 134 are not equal in distance from a first plane where the first wall 25 is located, wherein the second direction Z is perpendicular to the first wall 25. In the embodiment of the present application, distances between different regions of the bottom wall 134 and the first plane in the second direction Z can be reasonably set according to the amounts of emissions accumulated in different regions of the bottom wall 134 of the escape cavity 131. For example, if the bottom wall 134 of the escape cavity 131 includes a first region and a second region, and when thermal runaway of the battery cell 20 occurs, due to the effect of gravity, if the emission from the battery cell 20 collected in the first region is more than the emission from the battery cell 20 collected in the second region, the bottom wall 134 of the escape cavity 131 can be set so that the distance between the first region and the first plane is greater than the distance between the second region and the first plane, so as to avoid the impact of more emission in the first region on the pressure relief mechanism 213 corresponding to the first region, and further avoid thermal spread caused by the accumulation of the emission discharged through the pressure relief mechanism 213 in the escape cavity 131, which is conducive to improving the safety performance of the battery 10.

The second direction Z in the embodiment of the present application is perpendicular to the first wall 25, that is, perpendicular to the first plane where the first wall 25 is located. For example, the second direction Z may also be perpendicular to the first direction X. For another example, the second direction Z may also be the height direction of the battery cell 20.

The at least two regions of the bottom wall 134 in the embodiment of the present application may refer to any region of the bottom wall 134 of the escape cavity 131. For example, taking the first region and the second region included in the bottom wall 134 of the escape cavity 131 as an example, the first region and the second region may be any two non-overlapping regions of the bottom wall 134. It should be understood that the first region and the second region may have the same or different areas on the bottom wall 134. The distance between the first region and the first plane in the second direction Z in the embodiment of the present application may refer to the average value, the maximum value, or the minimum value of the distances between all points on the first region and the first plane. Correspondingly, the distance between the second region and the first plane in the second direction Z in the embodiment of the present application may also refer to the average value, the maximum value, or the minimum value of the distances between all points on the second region and the first plane. For example, the distance between the first region and the first plane in the second direction Z may take the minimum value of the distances between all points on the first region and the first plane, at the same time, the distance between the second region and the first plane in the second direction Z also takes the minimum value of the distances between all points on the second region and the first plane, and the minimum value corresponding to the first region is different from the minimum value corresponding to the second region, which is not repeated here for the sake of brevity.

Optionally, as an embodiment, in the first direction X, the distance between at least a part of region of the bottom wall 134 and the first plane gradually increases in the second direction Z, and/or, in the first direction X, the distance between at least a part of region of the bottom wall 134 and the first plane gradually decreases in the second direction Z. As shown in Fig. 10 to Fig. 13, there is at least a part of region in the bottom wall 134 meets that: in the first direction X, the part of region is inclined relative to the first plane. In this way, at least a part of region of the bottom wall 134 is inclined in the first direction X, and therefore, due to the effect of gravity, the emission discharged through the pressure relief mechanism 213 can be accumulated in a specific region of the bottom wall 134 of the escape cavity 13. For example, according to the inclination direction of the inclined region of the bottom wall 134, the emission may be accumulated concentratedly in a region of the bottom wall 134 far away from the first plane in the second direction Z. Moreover, the distance from the specific region to the first plane is also relatively long, and therefore, the thermal impact on the battery cell 20 can be reduced by controlling the specific accumulation region of the emission on the bottom wall 134 of the escape cavity 131, so as to improve the safety of the battery 10.

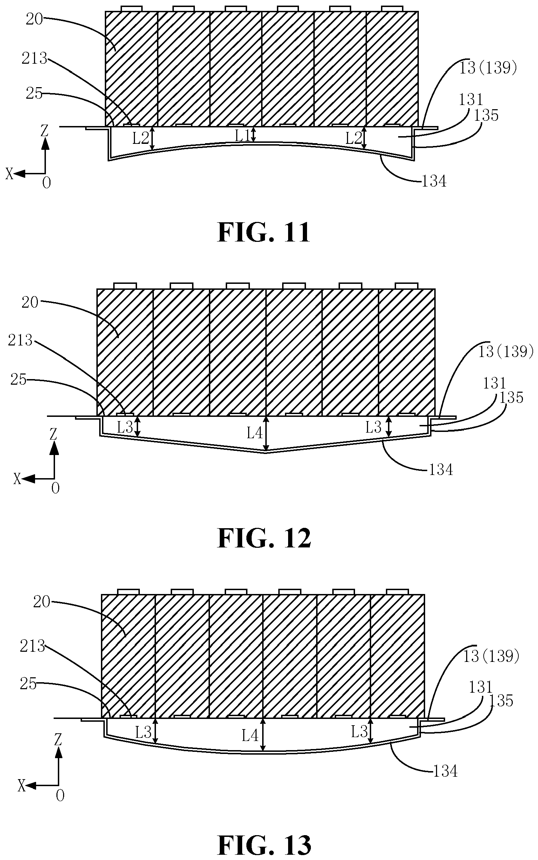

Optionally, as an embodiment, in the first direction X, from the center of the bottom wall 134 to an end portion of the bottom wall 134, the distance between the bottom wall 134 and the first plane in the second direction Z increases gradually or decreases gradually. In the embodiment of the present application, as shown in Fig. 10 and Fig. 11, in the first direction X, from the center of the bottom wall 134 to the end portion of the bottom wall 134, the distance between the region closer to the center of the bottom wall 134 of the escape cavity 131 and the first plane is represented as L1, the distance between the region farther from the center of the bottom wall 134 of the escape cavity 131 and the first plane is represented as L2, and L1 is smaller than L2. Therefore, under the action of gravity, the emission on the bottom wall 134 may accumulate at a place far from the center of the bottom wall 134 of the escape cavity 131. In addition, due to the small size of the side wall at the end portion of the escape cavity 131 in the first direction X, the accumulation of the emission discharged by the pressure relief mechanism 213 is more serious at the end portion position of the escape cavity 131 in the first direction X. Therefore, when the bottom wall 134 of the escape cavity 131 is arranged such that in the first direction, the distance between the bottom wall 134 and the first plane in the second direction z gradually increases from the center of the bottom wall to the end portion of the bottom wall 134, since the distance between an end portion region of the bottom wall 134 in the first direction X and the first plane in the second direction Z is relatively large, when thermal runaway of the battery 10 occurs, at the end portion position of the escape cavity 131 in the first direction X, the accumulation of the emission is serious, but there is a relatively large space to accommodate the emission discharged through the pressure relief mechanism 213, thereby reducing the impact on the pressure relief mechanism 213 and improving the safety of the battery 10.

Correspondingly, as shown in Fig. 12 and Fig. 13, in the first direction X, from the center of the bottom wall 134 to the end portion of the bottom wall 134, the distance between the region closer to the center of the bottom wall 134 of the escape cavity 131 and the first plane is represented as L3, the distance between the region farther from the center of the bottom wall 134 of the escape cavity 131 and the first plane is represented as L4, and L3 is smaller than L4. Therefore, under the action of gravity, the emission on the bottom wall 134 may accumulate at the center of the bottom wall 134 of the escape cavity 131. In addition, due to the small size of the side wall at the end portion of the escape cavity 131 in the first direction X, the accumulation of the emission discharged by the pressure relief mechanism 213 is more serious at the end portion position of the escape cavity 131 in the first direction X. Therefore, when the bottom wall 134 of the escape cavity 131 is arranged such that in the first direction X, the distance between the bottom wall 134 and the first plane in the second direction Z gradually decreases from the center of the bottom wall to the end portion of the bottom wall 134, since the distance between a central region of the bottom wall 134 in the first direction X and the first plane is relatively large in the second direction Z, when thermal runaway of the battery 10 occurs, the emission at the end portion position of the escape cavity 131 in the first direction X may pass through a slope on the bottom wall 134 to move towards the center of the bottom wall 134, thereby reducing the impact on the pressure relief mechanism 213 and improving the safety of the battery 10.

It should be understood that in the embodiment of the present application, the bottom wall 134 may be configured as an arc surface and/or a plane, so as to facilitate the smooth movement of the emission discharged by the pressure relief mechanism 213 on the bottom wall 134 of the escape cavity 131, and also facilitate the processing and assembling of the battery 10.

Optionally, as an embodiment, the bottom wall 134 arranged opposite to the first wall 25 in the escape cavity 131 in the embodiment of the present application may be provided with a sedimentation groove 138 with an opening facing the first wall 25, and in the second direction Z, the distance between a groove bottom wall of the sedimentation groove 138 and the first plane where the first wall 25 is located is greater than the distance between the region on the bottom wall 134 other than the sedimentation groove 138 and the first plane, wherein the second direction Z is perpendicular to the first direction X. In the embodiment of the present application, by arranging the sedimentation groove 138 with the opening facing the first wall 25 on the bottom wall 134 of the escape cavity 131, when the pressure relief mechanism 213 is actuated, since there is a sedimentation groove with a certain depth on the bottom wall 134 of the escape cavity 131, the sedimentation groove 138 has the certain depth to accommodate the emission discharged through the pressure relief mechanism 213, thereby avoiding the accumulation of the emission on other regions on the bottom wall 134, reducing the impact on the pressure relief mechanism 213, and further improving the safety of the battery 10.

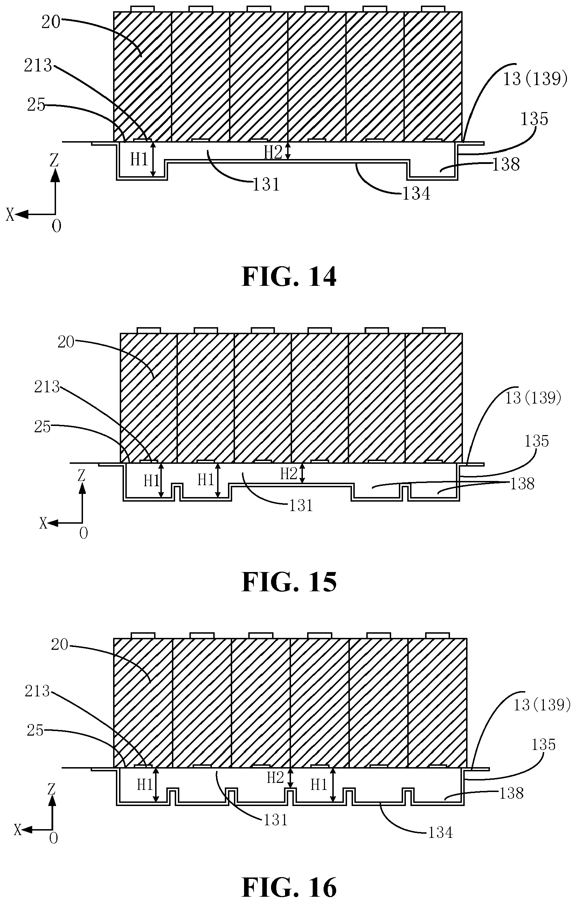

The manner of arranging the sedimentation groove 138 on the bottom wall 134 of the escape cavity 131 in the embodiment of the present application will be described in detail below with reference to the drawings. Fig. 14 to Fig. 16 respectively show schematic cross-sectional diagrams of the battery 10 according to an embodiment of the present application. The battery 10 shown in Fig. 14 to Fig. 16 may be the battery 10 shown in Fig. 2, and sections shown in Fig. 14 to Fig. 16 are all cross-sectional diagrams of the battery 10 perpendicular to the third direction Y. For example, the sections shown in Fig. 14 to Fig. 16 are perpendicular to the section shown in Fig. 3 or Fig. 4; and the sections shown in Fig. 14 to Fig. 16 are parallel to the section shown in Fig. 6, and also parallel to the sections shown in Fig. 10 to Fig. 13.

As shown in Fig. 14 to Fig. 16, the bottom wall 134 of the embodiment of the present application may be provided with one or a plurality of sedimentation grooves 138, and for any sedimentation groove 138, the depth H1 of the sedimentation groove 138 is greater than the depth H2 of the region of the bottom wall 134 other than sedimentation groove 138. The depth H1 of the sedimentation groove 138 is the distance between the bottom wall of the sedimentation groove 138 and the first wall 25 in the second direction Z; the depth H2 of the region of the bottom wall 134 other than the sedimentation groove 138 is the distance between the region and the first wall 25 in the second direction Z.

It should be understood that the depth H1 of the sedimentation groove 138 in the embodiment of the present application may refer to: the average value, the maximum value, or the minimum distance between all points on the bottom wall of the sedimentation groove 138 and the first plane where the first wall 25 is located. Correspondingly, the depth H2 of the region of the bottom wall 134 other than the sedimentation groove 138 may refer to: the average value, the maximum value, or the minimum distance between all points on the region of the bottom wall 134 other than the sedimentation groove 138 and the first plane where the first wall 25 is located. For example, the distance between the bottom wall of the sedimentation groove 138 and the first plane in the second direction Z may take the minimum value of the distances between all points on the bottom wall of the sedimentation groove 138 and the first plane, and at the same time, the distance between the region of the bottom wall 134 other than the sedimentation groove 138 and the first plane in the second direction Z also takes the minimum value of the distances between all points on the region of the bottom wall 134 other than the sedimentation groove 138 and the first plane. The minimum value corresponding to the bottom wall of the sedimentation groove 138 is greater than the minimum value corresponding to the region of the bottom wall 134 other than the sedimentation groove 138, but the embodiment of the present application is not limited thereto.

Optionally, in some embodiments, as shown in Fig. 14 and Fig. 15, the sedimentation groove 138 on the bottom wall 134 of the escape cavity 131 is located at the end portion position of the bottom wall 134 in the first direction X. In the embodiment of the present application, due to the small size of the side wall at the end portion of the escape cavity 131 in the first direction X, the accumulation of the high-temperature high-pressure emission discharged by the pressure relief mechanism 213 is more serious at the side wall of the end portion of the escape cavity 131 in the first direction X. The sedimentation groove 138 is arranged at the end portion position of the bottom wall 134 of the escape cavity 131 in the first direction X. On the one hand, the sedimentation groove 138 can accommodate the emission, so that most of the emission is accumulated in the sedimentation groove 138, and on the other hand, the sedimentation groove 138 has a large depth, so that it can reduce the thermal impact of the emission on the battery cell 20, avoid thermal spread, and improve the safety of the battery 10.

Optionally, in some embodiments, as shown in Fig. 15 and Fig. 16, the bottom wall 134 of the escape cavity 131 in the embodiment of the present application may be provided with a plurality of sedimentation grooves 138 arranged at intervals in the first direction X. In the embodiment of the present application, according to the quantity of emissions accumulated in different regions of the bottom wall 134 of the escape cavity 131, a plurality of sedimentation grooves 138 may be arranged at different regions of the bottom wall 134, and the sedimentation grooves 138 each have a certain depth to accommodate the emission discharged through the pressure relief mechanism 213. Moreover, since the sedimentation grooves 138 each have a large depth, when thermal runaway of the battery cell 20 occurs, by arranging the sedimentation grooves 138 for a plurality of regions with more emissions on the bottom wall 134 of the escape cavity 131, it can effectively prevent the emissions in the plurality of regions from affecting the corresponding pressure relief mechanism 213, thereby avoiding the thermal spread caused by the accumulation of emission in the escape cavity 131. That is, the emission may be controlled to the specific sedimentation grooves 138 on the bottom wall 134 of the escape cavity 131 to reduce the thermal impact to the battery cell 20, which is conducive to improving the safety of the battery 10.

For example, as shown in Fig. 16, the bottom wall 134 of the escape cavity 131 of the embodiment of the present application may also be provided with a plurality of sedimentation grooves 138 arranged at intervals in the first direction X, and the plurality of sedimentation grooves 138 correspond one by one to pressure relief mechanisms 213 of a plurality of battery cells 20. In this way, when the pressure relief mechanism 213 of each battery cell 20 is actuated, the emission discharged from the battery cell 20 through the pressure relief mechanism 213 may be accumulated in the corresponding sedimentation groove 138, which is capable of avoiding thermal impact on other battery cells 20 and avoiding thermal spread, thereby improving the safety of the battery 10.

Optionally, the plurality of sedimentation grooves 138 of the bottom wall 134 arranged at intervals in the first direction X in the embodiment of the present application may have the same or different depths. For example, as shown in Fig. 14 to Fig. 16, when the depths of the plurality of sedimentation grooves 138 are set to be the same, it is convenient for the processing and assembling of the battery 10. For another example, different from what is shown in Fig. 14 to Fig. 16, the depths of the plurality of sedimentation grooves 138 may also be designed according to the accumulation of emissions in different regions on the bottom wall 134, that is, the depths of the plurality of sedimentation grooves 138 may be different. Exemplarily, due to the small size of the side wall of the end portion of the escape cavity 131 in the first direction X, the accumulation of the high-temperature and high-pressure emission discharged by the pressure relief mechanism 213 is more serious at the side wall of the end portion of the escape cavity 131 in the first direction X, and therefore, a deeper sedimentation groove 138 may be arranged near the end portion of the escape cavity 131 in the first direction X, and a shallower sedimentation groove 138 may be arranged near a central position of the bottom wall 134 of the escape cavity 131.

It should be understood that, in the embodiment of the present application, the distance H1 between the groove bottom wall of the sedimentation groove 138 and the first plane where the first wall 25 is located should not be set too large or too small, and the value of the distance H1 may be set specifically according to actual applications. For example, a value range of the distance H1 between the groove bottom wall of the sedimentation groove 138 and the first plane where the first wall 25 is located is [0.1 mm, 25 mm]. For another example, a value range of the distance H between the groove bottom wall of the sedimentation groove 138 and the first plane where the first wall 25 is located is [3 mm, 20 mm]. If the above distance H1 is set too small, it will be difficult to meet the actual needs of the battery 10. When thermal runaway of the battery cell 20 occurs, the emission discharged by the pressure relief mechanism 213 will be excessively accumulated in the sedimentation groove 138. If the distance from the emission to the first wall 25 of the battery cell 20 is too small, the corresponding battery cell 20 will be affected, which may easily lead to thermal spread between the plurality of battery cells 20 opposite to the sedimentation groove 138, and at the same time cause thermal impact on other adjacent battery cells 20, which reduces the safety of the battery 10. If the distance H is set too large, the utilization rate of the space inside the battery 10 will be low, which increases the processing cost of the battery 10. Therefore, the value of the distance H may be set to 0.1 mm, 0.5 mm, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, or 25 mm, or its value is within a range obtained by combining any two of the above values.

Although the present application has been described with reference to the preferred embodiments, various improvements may be made thereto and components thereof may be replaced with equivalents without departing from the scope of the present application. In particular, various technical features mentioned in the various embodiments may be combined in any manner as long as there is no structural conflict. The present application is not limited to the specific embodiments disclosed herein, but rather includes all technical solutions falling within the scope of the claims.

**Claims**

1. A battery, comprising:

   a box body (11) comprising an electrical cavity;
   a battery cell group (200) accommodated in the electrical cavity (11a), wherein the battery cell group (200) comprises a plurality of battery cells (20) arranged in a first direction, at least two battery cells (20) in the battery cell group (200) are each provided with a pressure relief mechanism (213), and the pressure relief mechanism (213) is arranged on a first wall (25) of the battery cell (20); and
   a supporting member (13) attached to the first wall (25) to support the battery cell (20), wherein the supporting member (13) comprises escape cavities (131) corresponding to at least two of the pressure relief mechanisms

(213) in the battery cell group (200), and the escape cavities (131) are used for providing deformation spaces for actuation of at least two of the pressure relief mechanisms (213).

2. The battery according to claim 1, wherein escape openings (132) are arranged on a surface of the supporting member (13) close to the battery cell group (200), at least two of the pressure relief mechanisms (213) face the escape openings (132), and the escape cavities (131) are in communication with the escape openings (132).

3. The battery according to claim 2, wherein when the pressure relief mechanism (213) is actuated, an emission from the battery cell (20) enters the escape cavity (131) through the escape opening (132), and is discharged from the escape cavity (131).

4. The battery according to claim 2 or 3, wherein the escape cavities (131) and/or the escape openings (132) are successively arranged in the first direction.

5. The battery according to any one of claims 1 to 4, wherein the escape cavity (131) is provided with a weak region (133), and the weak region (133) is used for, when the pressure relief mechanism (213) is actuated, allowing the emission to pass through the weak region (133) to be discharged from the escape cavity (131).

6. The battery according to claim 5, wherein the weak region (133) is used for being destroyed when the pressure relief mechanism (213) is actuated, thus allowing the emission to be discharged from the escape cavity (131).

7. The battery according to claim 6, wherein the escape cavity (131) comprises a bottom wall (134) and a side wall (135), the bottom wall (134) is arranged opposite to the first wall (25), the side wall (135) is connected to the bottom wall (134) and extends toward the first wall (25), and the weak region (133) is arranged on the bottom wall (134) and/or the side wall (135).

8. The battery according to claim 7, wherein the weak region (133) is arranged at an end portion of the bottom wall (134) and/or the side wall (135) in the first direction.

9. The battery according to any one of claims 6 to 8, wherein the weak region (133) meets:

$$1\times10^{-4}\left(mm\cdot L\right)/Wh\leq d/E\leq 3\times10^{-3}\left(mm\cdot L\right)/Wh$$

wherein d is the minimum thickness of the weak region (133), and E is the volumetric energy density of the battery cell (20).

10. The battery according to any one of claims 6 to 9, wherein the weak region (133) meets:

$$0.1\left(°C\cdot L\right)/Wh\leq T_1/E\leq 1.2\left(°C\cdot L\right)/Wh$$

wherein $T_1$ is the melting point of the material of the weak region (133), and E is the volumetric energy density of the battery cell (20).

11. The battery according to any one of claims 6 to 10, wherein the thickness of the weak region (133) is smaller than the thickness of the region on the escape cavity (131) other than the weak region (133).

12. The battery according to any one of claims 6 to 11, wherein the melting point of the material of the weak region (133) is smaller than the melting point of the material of the region on the escape cavity (131) other than the weak region (133).

13. The battery according to any one of claims 5 to 12, wherein the weak region (133) comprises a through hole (136), and when the pressure relief mechanism (213) is actuated, the emission passes through the through hole (136) and is discharged from the escape cavity (131).

14. The battery according to claim 13, wherein the weak region (133) further comprises a sealing structure (137) used for sealing the through hole (136), and the sealing structure (137) is used for being destroyed when the pressure relief mechanism (213) is actuated, thus allowing the emission of the battery cell (20) to pass through the through hole (136).

15. The battery according to claim 14, wherein the through hole (136) is filled with the sealing structure (137).

16. The battery according to claim 14, wherein the sealing structure (137) is arranged on an inner surface of the escape cavity (131) corresponding to the through hole (136); and/or,
the sealing structure (137) is arranged on an outer surface of the escape cavity (131) corresponding to the through hole (136).

17. The battery according to any one of claims 1 to 16, wherein the escape cavity (131) comprises a bottom wall (134) arranged opposite to the first wall (25), in a second direction, distances between at least two regions of the bottom wall (134) and a first plane where the first wall (25) is located are not equal, and the second direction is perpendicular to the first wall (25).

18. The battery according to claim 17, wherein in the first direction, the distance between at least a part of region of the bottom wall (134) and the first plane gradually increases in the second direction, and/or,
in the first direction, the distance between at least a part of region of the bottom wall (134) and the first plane gradually decreases in the second direction.

19. The battery according to claim 18, wherein in the first direction, the distance between the bottom wall (134) and the first plane increases gradually or decreases gradually in the second direction from the center of the bottom wall (134) to the end portion of the bottom wall (134).

20. The battery according to any one of claims 17 to 19, wherein the bottom wall (134) comprises an arc surface and/or a plane.

21. The battery according to any one of claims 17 to 20, wherein the bottom wall (134) is provided with a sedimentation groove (138) with an opening facing the first wall (25), and in the second direction, the distance between a groove bottom wall of the sedimentation groove (138) and the first plane is greater than the distance between a region on the bottom wall (134) other than the sedimentation groove (138) and the first plane.

22. The battery according to claim 21, wherein the sedimentation groove (138) is located at the end portion of the bottom wall (134) in the first direction.

23. The battery according to claim 21 or 22, wherein the bottom wall (134) is provided with a plurality of sedimentation grooves (138) arranged at intervals in the first direction.

24. The battery according to any one of claims 1 to 23, wherein the battery further comprises:

a collection cavity (11b) used for collecting emissions from the battery cell (20) when the pressure relief mechanism (213) is actuated;
wherein the supporting member (13) is further used for isolating the collection cavity (11b) from the electrical cavity (11a).

25. The battery according to claim 24, wherein the battery further comprises:
a protective member (113), and the protective member (113) is used for surrounding, together with the supporting member (13), to form the collection cavity (11b).

26. The battery according to any one of claims 1 to 25, wherein the supporting member (13) is at least a part of a wall of the box body (11), and the supporting member (13) is used for, when the pressure relief mechanism (213) is actuated, allowing an emission from the battery cell (20) to pass through the supporting member (13) and be discharged from the box body (11).

27. The battery according to any one of claims 1 to 26, wherein the supporting member (13) is a thermal management component (139), and the thermal management component (139) is used for adjusting the temperature of the battery cell (20).

28. An electrical device, comprising:

the battery according to any one of claims 1 to 27, wherein the battery is used for providing electric energy for the electrical device.

**FIG. 1**

**FIG. 2**

**FIG. 3**

**FIG. 4**

**FIG. 5**

**FIG. 6**

**FIG. 7**

**FIG. 8**

FIG. 9

FIG. 10

**FIG. 11**

**FIG. 12**

**FIG. 13**

**FIG. 14**

**FIG. 15**

**FIG. 16**

## INTERNATIONAL SEARCH REPORT

| International application No. |
|---|
| **PCT/CN2022/135300** |

**A.    CLASSIFICATION OF SUBJECT MATTER**

H01M50/244(2021.01)i;   H01M50/375(2021.01)i;   H01M10/613(2014.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电池, 安全, 泄压, 排气, 防爆, 支撑, 腔, 凹, 空间, 变形, battery, cell, saf+, relief, decompress+, exhaust, vent, chamber, room, space, support

**C.    DOCUMENTS CONSIDERED TO BE RELEVANT**

| Category* | Citation of document, with indication, where appropriate, of the relevant passages | Relevant to claim No. |
|---|---|---|
| X | CN 213584016 U (CONTEMPORARY AMPEREX TECHNOLOGY CO., LTD.) 29 June 2021 (2021-06-29)<br>  description, paragraphs [0004]-[0159], and figures 6-15 | 1-28 |
| X | CN 213636145 U (CONTEMPORARY AMPEREX TECHNOLOGY CO., LTD.) 06 July 2021 (2021-07-06)<br>  description, paragraphs [0005]-[0113], and figure 7 | 1-28 |
| X | WO 2022198457 A1 (CONTEMPORARY AMPEREX TECHNOLOGY CO., LTD.) 29 September 2022 (2022-09-29)<br>  description, paragraphs [0004]-[0237] | 1-28 |
| A | JP 2018060671 A (TOYOTA INDUSTRIES CORP.) 12 April 2018 (2018-04-12)<br>  entire document | 1-28 |
| A | DE 102008059956 A1 (DAIMLER AG) 10 June 2010 (2010-06-10)<br>  entire document | 1-28 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 June 2023** | **09 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/135300**

| Patent document cited in search report | | | Publication date (day/month/year) | Patent family member(s) | | | Publication date (day/month/year) |
|---|---|---|---|---|---|---|---|
| CN | 213584016 | U | 29 June 2021 | CA | 3156580 | A1 | 13 January 2022 |
| | | | | US | 2022013854 | A1 | 13 January 2022 |
| | | | | WO | 2022006903 | A1 | 13 January 2022 |
| | | | | KR | 20220013577 | A | 04 February 2022 |
| | | | | EP | 3965197 | A1 | 09 March 2022 |
| | | | | CN | 114175381 | A | 11 March 2022 |
| | | | | IN | 202117061215 | A | 17 June 2022 |
| | | | | JP | 2022543344 | A | 12 October 2022 |
| | | | | EP | 3965197 | B1 | 15 March 2023 |
| CN | 213636145 | U | 06 July 2021 | CA | 3156556 | A1 | 13 January 2022 |
| | | | | US | 2022013856 | A1 | 13 January 2022 |
| | | | | WO | 2022006897 | A1 | 13 January 2022 |
| | | | | KR | 20220013575 | A | 04 February 2022 |
| | | | | EP | 3965214 | A1 | 09 March 2022 |
| | | | | CN | 114175365 | A | 11 March 2022 |
| | | | | IN | 202117059129 | A | 24 June 2022 |
| | | | | JP | 2022543341 | A | 12 October 2022 |
| WO | 2022198457 | A1 | 29 September 2022 | US | 2022311085 | A1 | 29 September 2022 |
| | | | | US | 11522250 | B2 | 06 December 2022 |
| | | | | EP | 4089801 | A1 | 16 November 2022 |
| | | | | EP | 4089801 | A4 | 07 June 2023 |
| | | | | CA | 3156681 | A1 | 23 September 2022 |
| | | | | US | 2023018764 | A1 | 19 January 2023 |
| | | | | KR | 20220133758 | A | 05 October 2022 |
| | | | | CN | 115398720 | A | 25 November 2022 |
| | | | | IN | 202117058847 | A | 24 March 2023 |
| JP | 2018060671 | A | 12 April 2018 | | None | | |
| DE | 102008059956 | A1 | 10 June 2010 | DE | 102008059956 | B4 | 06 September 2012 |

Form PCT/ISA/210 (patent family annex) (July 2022)